# EUROPÄISCHE PATENTSCHRIFT

(11) **EP 3 183 304 B1**
(45) Veröffentlichungstag und Bekanntmachung des Hinweises auf die Patenterteilung: **01.08.2018**
(21) Anmeldenummer: 15766060.6
(22) Anmeldetag: 21.08.2015
(51) Int. Cl.: C09D 5/03, C08L 67/00, C08L 67/08, C08L 77/00, C08L 77/08

(54) **WÄSSRIGE DISPERSION EINES POLYESTERS UND EINES POLYAMIDS MIT GERINGER SÄURE-ZAHL UND DIESE ENTHALTENDE BESCHICHTUNGSZUSAMMENSETZUNG ZUM AUFBRINGEN EINER BASISLACKSCHICHT**
AQUEOUS DISPERSION OF A POLYESTER AND POLYAMIDE WITH LOW ACID NUMBER AND COATING COMPOSITIONS COMPRISING THE SAME FOR THE APPLICATION OF A BASE VARNISH LAYER
DISPERSION AQUEUSE D'UN POLYESTER ET D'UN POLYAMIDE AYANT UN INDICE D'ACIDITÉ FAIBLE ET UNE COMPOSITION DE REVÊTEMENT LA CONTENANT DESTINÉ À APPLIQUER UNE COUCHE D'APPRÊT

(30) Priorität: 22.08.2014 EP 14182025
(43) Veröffentlichungstag der Anmeldung: 28.06.2017
(73) Patentinhaber: BASF Coatings GmbH, 48165 Münster (DE)
(72) Erfinder: CORTEN, Cathrin, 59423 Unna (DE); EIERHOFF, Dirk, 48155 Münster (DE); KRETH, Susanne-Katharina, 48165 Münster (DE); WILM, Patrick, 59229 Ahlen (DE); SCHWARZ, Jörg, 48163 Münster (DE); BOSHE-PLOIS, Stephanie, 48607 Ochtrup (DE); NICKOLAUS, Ralf, 48317 Drensteinfurt (DE)
(74) Vertreter: BASF IP Association
(86) Internationale Anmeldenummer: PCT/EP2015/069262
(87) Internationale Veröffentlichungsnummer: WO 2016/026966

(56) Entgegenhaltungen:
- WO-A1-2009/100938
- DE-A1- 4 028 386
- US-A- 5 025 043

## Beschreibung

Die vorliegende Erfindung betrifft eine wässrige Dispersion (P) umfassend wenigstens ein polymeres Harz (P1) und wenigstens ein davon verschiedenes polymeres Harz (P2), wobei das polymere Harz (P1) ein Polyamid ist und das polymere Harz (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol, wobei (P) erhältlich ist durch Dispergieren von (P1) in Wasser oder einem wässrigen Medium in Gegenwart von (P2), und wobei (P1) eine Säure-Zahl <10 mg KOH pro g an Polyamid aufweist, und (P) höchstens 25 Gew.-%, bezogen auf das Gesamtgewicht von (P), eines oder mehrerer organischer Lösemittel, aufweist, sowie eine wässrige Beschichtungszusammensetzung umfassend (P), wenigstens ein Bindemittel (A) umfassend wenigstens ein polymeres Harz (A1), welches von den polymeren Harzen (P1) und (P2) verschieden ist, und wenigstens ein Pigment (B) zur zumindest teilweisen Beschichtung eines Substrats mit einer Basislackschicht.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Mehrschichtlackierungen werden dabei bevorzugt nach dem sogenannten "Basislack/Klarlack"-Verfahren aufgebracht, d.h. es wird ein pigmentierter Basislack vorlackiert und nach kurzer Ablüftzeit ohne Einbrennschritt (Nass-in-Nass-Verfahren) mit Klarlack überlackiert. Anschließend werden Basislack und Klarlack zusammen eingebrannt. Besonders große Bedeutung hat das "Basislack/Klarlack"-Verfahren bei der Applikation von Automobil-Metalleffektlacken erlangt.

Aus wirtschaftlichen und ökologischen Gründen besteht ein Bedarf beim Auftragen solcher Mehrschichtlackierungen, insbesondere bei der Applikation der Basislackschicht, wässrige Beschichtungszusammensetzungen einzusetzen.

Die Beschichtungszusammensetzungen zur Herstellung dieser Basislackschichten sollten nach dem vorstehend genannten "Nass-in-Nass"-Verfahren zu verarbeiten sein, d.h. sie sollten nach einer möglichst kurzen Vortrocknungszeit ohne Einbrennschritt mit einer Klarlackschicht überlackiert werden können, ohne dass dabei Störungen im visuellen Erscheinungsbild wie zum Beispiel sogenannte Nadelstiche, Kocher, Stippen und/oder Verlaufsstörungen auftreten. Um solche Störungen zumindest zu minimieren, werden üblicherweise unter anderem geeignete Rheologiehilfsmittel in den aufzutragenden Beschichtungszusammensetzungen eingesetzt.

Bei Metalleffektlacken des Basislack/Klarlack-Typs sollten außerdem noch weitere Anforderungen erfüllt werden. Der Metalleffekt hängt entscheidend von der Orientierung der Metallpigmentteilchen in der Lackschicht ab. Ein im "Nass-in-Nass"-Verfahren zu verarbeitender Metalleffektbasislack muss demnach Lackfilme liefern, in denen die Metallpigmente nach der Applikation in einer günstigen räumlichen Orientierung vorliegen und in denen diese Orientierung schnell so fixiert wird, dass sie im Laufe des weiteren Lackierungsprozesses nicht gestört werden kann. Geeignete Kenngrößen zur Charakterisierung des Metalleffektes sind die Helligkeit des Farbtons, der Flop-Index sowie die Beurteilung der Wolkigkeit der resultierenden Lackierung.

Aus EP 0 877 063 A2 sind wässrige Beschichtungszusammensetzungen bekannt, die ein üblicherweise in wässrigen Zusammensetzungen eingesetztes Polyamid enthalten, welches sich aufgrund seines Einsatzzwecks in wässrigen Systemen durch eine vergleichsweise hohe Säure-Zahl von üblicherweise ≥30 auszeichnet. Wässrige Beschichtungszusammensetzungen, die solche üblicherweise in wässrigen Zusammensetzungen eingesetzten Polyamide mit vergleichsweise hoher Säure-Zahl aufweisen, sind ferner zudem aus WO 2009/100938 A1 und EP 2 457 961 A1 bekannt. Nachteilig an der Gegenwart eines solchen Polyamids als Rheologiehilfsmittel in wässrigen Beschichtungszusammensetzungen ist jedoch insbesondere das Auftreten von Stippen bei der Verarbeitung mittels des "Nass-in-Nass"-Verfahrens bzw. bei der Einarbeitung des Polyamids in die Beschichtungszusammensetzungen und/oder eine nicht ausreichende Lagerstabilität (Entmischung bzw. Phasenseparation) derartiger Beschichtungszusammensetzungen, insbesondere bei höheren Temperaturen wie beispielsweise Temperaturen ≥ 40°C.

Auch aus DE 40 28 386 A1 sind wässrige Beschichtungszusammensetzungen bekannt, die als alleiniges Rheologiehilfsmittel ein Polyamid enthalten.

Aus EP 1 153 989 A1 sind wässrige Beschichtungszusammensetzungen bekannt, die ein solches üblicherweise in wässrigen Beschichtungszusammensetzungen eingesetztes Polyamid mit einer Säure-Zahl ≥30 wie beispielsweise das kommerziell erhältliche Produkt Disparlon® AQ-600 aufweisen und zudem als weiteres Rheologiehilfsmittel ein Metallsilikat wie beispielsweise das kommerziell erhältliche Metallsilikat "Laponite® RD" enthalten. Nachteilig an der Gegenwart eines solchen Metallsilikats, insbesondere in Kombination mit einem üblicherweise in wässrigen Zusammensetzungen eingesetzten Polyamid mit einer Säure-Zahl >30, in wässrigen Beschichtungszusammensetzungen kann jedoch oftmals das Auftreten von Nadelstichen und/oder Kochern bei der Verarbeitung mittels des "Nass-in-Nass"-Verfahrens sein. Der Einsatz von solchen Metallsilikaten als alleiniges Rheologiehilfsmittel hat jedoch u.a. Nachteile hinsichtlich des Auftretens von Läufern und Kochern.

Der Einsatz von Polyamiden mit geringeren Säure-Zahlen per se als Rheologiehilfsmittel ist grundsätzlich bekannt, jedoch können solche Polyamide ausschließlich in lösemittel-basierten Beschichtungszusammensetzungen eingesetzt werden. Der Einsatz von solchen lösemittel-basierten Beschichtungszusammensetzungen mit hohen Anteilen an organischen Lösemitteln ist jedoch aus ökologischen Gründen unerwünscht. Eine direkte Einarbeitung solcher Polyamide mit geringer Säure-Zahl als Rheologiehilfsmittel in wässrige Beschichtungszusammensetzungen ist nicht möglich, da es hierbei zur Stippenbildung kommt bzw. entsprechende Beschichtungszusammensetzungen keine ausreichende Lagerstabilität aufweisen.

Es besteht daher ein Bedarf an wässrigen Beschichtungszusammensetzungen, insbesondere Basislackzusammensetzungen, welche die vorstehend genannten Nachteile nicht aufweisen, aber dennoch den Einsatz von Polyamiden mit nur geringen Säure-Zahlen als Rheologiehilfsmittel ermöglichen.

Eine Aufgabe der vorliegenden Erfindung ist es daher, eine wässrige Beschichtungszusammensetzung, insbesondere eine wässrige Basislackzusammensetzung, zur Verfügung zu stellen, welche keine Nachteile und insbesondere Vorteile gegenüber den aus dem Stand der Technik bekannten Beschichtungszusammensetzungen aufweist und den Einsatz von Polyamiden mit nur geringen Säure-Zahlen als Rheologiehilfsmittel in wässrigen Beschichtungszusammensetzungen ermöglicht. Insbesondere ist es eine Aufgabe der vorliegenden Erfindung, eine solche wässrige Beschichtungszusammensetzung, insbesondere eine solche wässrige Basislackzusammensetzung, zur Verfügung zu stellen, welche sich durch vorteilhafte Applikationseigenschaften auszeichnet, bei der aber gleichzeitig der zu erzielende Metalleffekt der Beschichtungszusammensetzung nicht negativ beeinflusst werden soll.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Dispersion (P) umfassend wenigstens ein polymeres Harz (P1) und wenigstens ein davon verschiedenes polymeres Harz (P2), wobei
das polymere Harz (P1) ein Polyamid ist und
das polymere Harz (P2) ein Polyester ist,
wobei die wässrige Dispersion (P) erhältlich ist durch Dispergieren des polymeren Harzes (P1) in Wasser oder einem wässrigen Medium in Gegenwart des polymeren Harzes (P2),
dadurch gekennzeichnet, dass
das als polymeres Harz (P1) eingesetzte Polyamid eine Säure-Zahl <10 mg KOH pro g an Polyamid aufweist, und
der als polymeres Harz (P2) eingesetzte Polyester mindestens erhältlich ist durch Umsetzung wenigstens einer polymerisierten aliphatischen C₁₂-C₂₄-Monocarbonsäure mit wenigstens einem Diol und/oder Polyol, und
die wässrige Dispersion (P) höchstens 25 Gew.-%, bezogen auf das Gesamtgewicht der Dispersion (P), eines oder mehrerer organischer Lösemittel, aufweist.

Es wurde überraschend gefunden, dass sich eine solche wässrige Dispersion (P) als Komponente in einer wässrigen Beschichtungszusammensetzung eignet, welche insbesondere zur zumindest teilweisen Beschichtung eines gegebenenfalls beschichteten Substrats mit einer Basislackschicht eingesetzt werden kann. Es wurde überraschend gefunden, dass sich eine solche resultierende erfindungsgemäße wässrige Beschichtungszusammensetzung insbesondere im "Basislack/Klarlack"-Verfahren zum Aufbringen einer Basislackschicht auf ein gegebenenfalls beschichtetes Substrats eignet und deshalb als Basislackbeschichtungszusammensetzung eingesetzt werden kann.

Es wurde zudem überraschend gefunden, dass es die Gegenwart des polymeren Harzes (P2) in der Dispersion (P) ermöglicht, ein Polyamid als polymeres Harz (P1), welches eine Säure-Zahl <10 mg KOH pro g an Polyamid aufweist und welches daher üblicherweise ausschließlich in lösemittel-basierten Beschichtungszusammensetzungen eingesetzt werden kann, in wässrige Beschichtungszusammensetzungen einzuarbeiten. Insbesondere wurde überraschend gefunden, dass sich die erfindungsgemäße Dispersion (P) der polymeren Harze (P1) und (P2) bzw. das mittels (P2) in eine wässrige Zusammensetzung überführte Polyamid (P1) als Rheologiehilfsmittel in wässrigen Beschichtungszusammensetzungen eignet. Insbesondere wurde zudem überraschend gefunden, dass es diesbezüglich erfindungswesentlich ist, dass der erfindungsgemäß als polymeres Harz (P2) eingesetzte Polyester mindestens erhältlich ist durch Umsetzung wenigstens einer polymerisierten aliphatischen C₁₂-C₂₄-Monocarbonsäure mit wenigstens einem Diol und/oder Polyol.

Ferner wurde überraschend gefunden, dass ein Maximalanteil von höchstens 25 Gew.-% innerhalb der Dispersion (P), bezogen auf das Gesamtgewicht der Dispersion (P), an einem oder mehreren organischen Lösemitteln, erfindungswesentlich ist, da entsprechende wässrige Vergleichsdispersionen, die einen höheren Anteil an organischen Lösemitteln aufweisen, es zwar auch ermöglichen, Polyamide mit einer Säure-Zahl <10 mg KOH pro g an Polyamid aufweisen, (kurzzeitig) in eine wässrige Phase zu überführen, diese Vergleichsdispersionen jedoch nur eine unzureichende Lagerstabilität aufweisen, da es nach kurzer Zeit zu einer Entmischung bzw. Phasenseparation kommt.

Es wurde ferner überraschend gefunden, dass insbesondere durch die Gegenwart der in der erfindungsgemäßen Dispersion (P) enthaltenen polymeren Harze (P1) und (P2) bzw. durch die Gegenwart des mittels (P2) in die erfindungsgemäße wässrige Dispersion (P) überführten polymeren Harzes (P1) das Auftreten von Stippen, Nadelstichen und Kochern verhindert bzw. verbessert werden kann, wenn eine die Dispersion (P) enthaltende wässrige Beschichtungszusammenzusammensetzung zur zumindest teilweisen Beschichtung eines gegebenenfalls beschichteten Substrats mit einer Basislackschicht eingesetzt wird. Dabei wurde zudem überraschend festgestellt, dass der Metalleffekt der jeweiligen Beschichtungszusammensetzung nicht negativ beeinflusst wird und sich die erfindungsgemäßen Beschichtungszusammensetzungen insbesondere durch gute Eigenschaften hinsichtlich der Beurteilung der Wolkigkeit der Lackierung auszeichnen. Ferner wurde überraschenderweise gefunden, dass sich die erfindungsgemäßen Beschichtungszusammensetzungen durch eine gute Lagerstabilität auch bei höheren Temperaturen wie beispielsweise Temperaturen ≥ 40°C über eine Dauer von 2 Wochen auszeichnen. Aus dem Stand der Technik bekannte übliche Beschichtungszusammensetzungen, in denen Polyamide mit einer Säure-Zahl ≥10 oder Metallsilikate wie zum Beispiel das kommerziell erhältliche Produkt Laponite® als Rheologiehilfsmittel eingesetzt werden, weisen hinsichtlich wenigstens einer dieser vorstehend genannten Eigenschaften Nachteile auf. Eine direkte separate Einarbeitung des polymeren Harzes (P1) (ohne vorherige Herstellung einer Dispersion (P) aus (P1) und dem polymeren Harz (P2)) in wässrige Beschichtungszusammensetzungen ist nicht möglich, da es hierbei zur Stippenbildung kommt bzw. entsprechende Beschichtungszusammensetzungen keine ausreichende Lagerstabilität aufweisen.

Die Begriffe "Kocher", "Läufer", "Nadelstiche", "Flop" und "Stippen" sind dem Fachmann bekannt und beispielsweise definiert im Römpp Lexikon, Lacke und Druckfarben, Georg Thieme Verlag 1998.

### Wässrige Dispersion (P)

Vorzugsweise addieren sich die Anteile in Gew.-% der in der erfindungsgemäßen wässrigen Dispersion (P) enthaltenen Komponenten Wasser, (P1) und (P2) sowie einer gegebenenfalls vorhandenen nachstehend beschriebenen Komponente (C) sowie gegebenenfalls vorhandener organischer Lösemittel auf 100 Gew.-%, bezogen auf das Gesamtgewicht der wässrigen Dispersion (P).

Der Begriff "umfassend" im Sinne der vorliegenden Erfindung im Zusammenhang mit der erfindungsgemäßen wässrigen Dispersion (P) hat in einer bevorzugten Ausführungsform die Bedeutung "bestehend aus". Dabei können hinsichtlich der erfindungsgemäßen wässrigen Dispersion (P) in dieser bevorzugten Ausführungsform eine oder mehrere der weiteren nachstehend genannten darin optional enthaltenen Komponenten in der wässrigen Dispersion (P) enthalten sein wie zum Beispiel - neben den Komponenten Wasser, (P1) und (P2) -, zudem gegebenenfalls (C) und/oder organische(s) Lösemittel. Alle Komponenten können dabei jeweils in ihren vorstehend und nachstehend genannten bevorzugten Ausführungsformen in der erfindungsgemäßen wässrigen Dispersion (P) enthalten sein.

Die erfindungsgemäße wässrige Dispersion (P) enthält höchstens 25 Gew.-%, bezogen auf das Gesamtgewicht der Dispersion (P), eines oder mehrerer organischer Lösemittel. Dem Fachmann ist der Begriff eines "organischen Lösemittels" bekannt. Dieser Begriff ist beispielsweise in der Richtlinie 1999/13/EG des Rates vom 11. März 1999 (Artikel §2, Punkt 18.) definiert (darin als "Lösungsmittel" bezeichnet). Beispiele für organische Lösemittel sind (hetero)cyclische, (hetero)aliphatische oder (hetero)aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon.

Vorzugsweise enthält die erfindungsgemäße wässrige Dispersion (P) höchstens 24,5 Gew.-%, besonders bevorzugt höchstens 24 Gew.-%, ganz besonders bevorzugt höchstens 23,5 Gew.-%, insbesondere höchstens 23 Gew.-%, am meisten bevorzugt höchstens 20 Gew.-%, jeweils bezogen auf das Gesamtgewicht der Dispersion (P), eines oder mehrerer organischer Lösemittel.

Die erfindungsgemäße wässrige Dispersion (P) enthält als flüssiges Verdünnungsmittel Wasser. Unter dem Begriff "wässrig" im Zusammenhang mit der erfindungsgemäßen wässrigen Dispersion (P) werden vorzugsweise solche flüssigen wässrigen Dispersionen (P) verstanden, die - als flüssiges Verdünnungsmittel, d.h. als flüssiges Lösemittel und/oder Dispergiermittel - Wasser als Hauptkomponente enthalten. Gegebenenfalls können die erfindungsgemäßen wässrigen Dispersionen (P) jedoch organische Lösemittel in geringen Anteilen bis höchstens 25 Gew.-%, bezogen auf das Gesamtgewicht der wässrigen Dispersion (P), enthalten.

Vorzugsweise ist die erfindungsgemäße wässrige Dispersion (P) erhältlich durch Dispergieren des polymeren Harzes (P1) in Wasser oder einem wässrigen Medium in Gegenwart des polymeren Harzes (P2) sowie gegebenenfalls einer weiteren Komponente (C) und/oder organischem Lösemittel(n) in einem Schritt (1) unter Erhalt der wässrigen Dispersion (P).

Das Dispergieren gemäß Schritt (1) erfolgt dabei vorzugsweise bei einer Temperatur im Bereich von 15 bis 30°C über eine Dauer von 10 bis 60 Minuten, vorzugsweise über eine Dauer von 10 bis 30 Minuten. Das Dispergieren kann mittels handelsüblicher Geräte, insbesondere Dissolvern, erfolgen wie beispielsweise mit dem Gerät "Dispermat® LC30" der Firma VWA-Getzmann, Deutschland. Solche Geräte weisen üblicherweise eine in einem Rührbehälter befindliche Rührscheibe (Zahnscheibe) auf. Vorzugsweise liegt das relative Größenverhältnis des Durchmessers der Rührscheibe zum Durchmesser des Rührbehälters dabei in einem Bereich von 1:1,1 bis 1:2,5. Vorzugsweise liegt die Umfangsgeschwindigkeit der Rührscheibe bei Durchführen des Schritts (1) in einem Bereich von 15 bis 25 m/s, besonders bevorzugt von 15 bis 20 m/s. Die Füllhöhe des Rührbehälters liegt vorzugsweise in einem Bereich von 60 bis 90 %, bezogen auf die Gesamthöhe des Rührbehälters. Vorzugsweise ist der Durchmesser der Rührscheibe größer als der Abstand der Rührscheibe zum Boden des Rührbehälters. Das Dispergieren gemäß Schritt (1) erfolgt vorzugsweise so, dass sich dabei ein torusartiges Strömungsbild einstellt, d.h. ein sogenannter Doughnut-Effekt (Donut-Effekt) beobachtet wird. Dieser Begriff ist dem Fachmann bekannt.

Zur Herstellung der wässrigen Dispersion (P) kann neben (P1), (P2) und Wasser sowie gegebenenfalls organischem Lösemittel wie vorstehend beschrieben wenigstens eine weitere Komponente (C) eingesetzt werden.

Als Komponente (C) eignet sich vorzugsweise ein Emulgator, vorzugsweise ein solcher Emulgator, der vom polymeren Harz (P2) verschieden ist. Zudem ist die optionale Komponente (C) auch vom polymeren Harz (P1) verschieden. Es können auch zwei oder mehr voneinander verschiedene Komponenten (C) eingesetzt werden.

Jeder dem Fachmann bekannte übliche Emulgator eignet sich als Komponente (C). Vorzugsweise ist Komponente (C) ausgewählt aus der Gruppe bestehend aus Lecithinen und C₂-C₂₄-Fettalkoholpolyglykolethern. Die eingesetzten Polyglykolether können dabei vollständig oder partiell mit C₂-C₂₄-Fettalkoholen verethert sein. Ein geeignetes Lecithin, d.h. ein geeignetes Phospholipid, ist beispielsweise Lipotin® A, welches kommerziell erhältlich ist. Weiterhin geeignet ist Sojalecithin. Geeignete C₁₂-C₂₄-Fettalkoholpolyglykolether sind beispielsweise die kommerziell erhältlichen Produkte Lutensol® ON 60 und Lutensol® XP 70.

Wird zur Herstellung der Dispersion (P) wenigstens eine weitere Komponente (C) eingesetzt, so liegt das relative Gewichtsverhältnis des als polymeren Harzes (P2) eingesetzten Polyesters zu der Komponente (C) vorzugsweise im Bereich von 50:1 bis 1,5:1, besonders bevorzugt im Bereich von 35:1 bis 1,75:1, ganz besonders bevorzugt im Bereich von 30:1 bis 1,5:1, insbesondere bevorzugt im Bereich von 10:1 bis 4:1.

Vorzugsweise liegt die wenigstens eine weitere Komponente (C) in der erfindungsgemäßen wässrigen Dispersion (P) in einer Menge von 0,1 bis 10 Gew.-%, besonders bevorzugt von 0,1 bis 7,5 Gew.-%, ganz besonders bevorzugt von 1,5 bis 5 Gew.-%, jeweils bezogen auf das Gesamtgewicht der wässrigen Dispersion (P), vor.

Vorzugsweise liegt die wenigstens eine weitere Komponente (C) in der erfindungsgemäßen Beschichtungszusammensetzung in einer Menge von 0,05 bis 5 Gew.-%, ganz besonders bevorzugt von 0,05 bis 3 Gew.-%, jeweils bezogen auf das Gesamtgewicht der Beschichtungszusammensetzung, vor.

Vorzugsweise liegt das relative Gewichtsverhältnis der polymeren Harze (P2) und (P1) zueinander, jeweils bezogen auf deren Festkörpergehalt, in der Dispersion (P) in einem Bereich von 15:1 bis 1:1, besonders bevorzugt in einem Bereich von 12,5 bis 1,1:1, ganz besonders bevorzugt in einem Bereich von 10:1 bis 1,5:1, noch bevorzugter in einem Bereich von 8:1 bis 1,5:1, insbesondere in einem Bereich von 7:1 bis 1,5:1, am meisten bevorzugt in einem Bereich von 6,5:1 bis 1,5:1.

Vorzugsweise ist das als polymeres Harz (P1) eingesetzte Polyamid, bezogen auf dessen Festkörper, in der Dispersion (P) in einer Menge in einem Bereich von 0,1 bis 15 Gew.-%, besonders bevorzugt von 0,2 bis 12,5 Gew.-%, ganz besonders bevorzugt von 0,5 bis 10 Gew.-%, noch bevorzugter von 0,75 bis 9 Gew.%, am meisten bevorzugt von 1 bis 8 Gew.-% oder von 1 bis 7 Gew.-%, jeweils bezogen auf das Gesamtgewicht der Dispersion (P) vorhanden.

Vorzugsweise ist der als polymeres Harz (P2) eingesetzte Polyester, bezogen auf dessen Festkörper, in der Dispersion (P) in einer Menge in einem Bereich von 2,5 bis 25 Gew.-%, besonders bevorzugt von 3,5 bis 22,5 Gew.-%, ganz besonders bevorzugt von 4,5 bis 20 Gew.-%, noch bevorzugter von 5 bis 19 Gew.%, am meisten bevorzugt von 6 bis 18 Gew.-%, jeweils bezogen auf das Gesamtgewicht der Dispersion (P) vorhanden.

### Polymeres Harz (P1)

Das als polymeres Harz (P1) eingesetzte Polyamid weist eine Säure-Zahl <10 mg KOH pro g an Polyamid auf. Vorzugsweise weist das als polymeres Harz (P1) eingesetzte Polyamid eine Säure-Zahl <9 mg KOH pro g an Polyamid, besonders bevorzugt <8 mg KOH pro g an Polyamid, ganz besonders bevorzugt ≤7 mg KOH pro g an Polyamid, auf. Vorzugsweise weist das polymere Harz (P1) eine Säure-Zahl in einem Bereich von 0 bis <10,0 mg KOH pro g an Polyamid, besonders bevorzugt in einem Bereich von 0,1 bis <10,0 mg KOH pro g an Polyamid, ganz besonders bevorzugt in einem Bereich von 0,1 bis <9,0 mg KOH pro g an Polyamid, am meisten bevorzugt in einem Bereich von 0,1 bis 8,0 mg KOH pro g an Polyamid, auf. In einer weiteren bevorzugten Ausführungsform weist das polymere Harz (P1) eine Säure-Zahl in einem Bereich von 0,1 bis <10 mg KOH pro g an Polyamid, besonders bevorzugt in einem Bereich von 0,1 bis 9 mg oder von 0,5 bis 9 mg KOH pro g an Polyamid, ganz besonders bevorzugt in einem Bereich von 0,1 bis 8 mg oder von 0,5 bis 8 mg KOH pro g an Polyamid, insbesondere bevorzugt in einem Bereich von 0,1 bis ≤7 mg oder von 0,5 bis ≤7 mg KOH pro g an Polyamid auf. Die Säure-Zahl wird gemäß der nachstehend beschriebenen Methode ermittelt.

Jedes dem Fachmann bekannte übliche Polyamid kann als polymeres Harz (P1) eingesetzt werden, solange dieses Polyamid eine Säure-Zahl <10 mg KOH pro g an Polyamid aufweist. Bei dem entsprechenden Polyamid kann es sich dabei um ein Polyamid Homo- oder Copolymer handeln. Es kann auch eine Mischung aus zwei oder mehr voneinander verschiedenen Polyamiden als polymere Harz-Komponente (P1) eingesetzt werden.

Vorzugsweise weist das als polymeres Harz (P1) eingesetzte Polyamid eine Amin-Zahl <9 mg KOH pro g an Polyamid, besonders bevorzugt <8 mg KOH pro g an Polyamid, ganz besonders bevorzugt ≤7 mg KOH pro g an Polyamid, auf. Vorzugsweise weist das als polymeres Harz (P1) eingesetzte Polyamid eine Amin-Zahl in einem Bereich von 0,1 bis <10 mg KOH pro g an Polyamid, besonders bevorzugt in einem Bereich von 0,1 bis 9 mg oder von 0,5 bis 9 mg KOH pro g an Polyamid, ganz besonders bevorzugt in einem Bereich von 0,1 bis 8 mg oder von 0,5 bis 8 mg KOH pro g an Polyamid, insbesondere bevorzugt in einem Bereich von 0,1 bis ≤7 mg oder von 0,5 bis ≤7 mg KOH pro g an Polyamid auf. Dem Fachmann sind Bestimmungsmetoden zur Ermittlung der Amin-Zahl bekannt. Vorzugsweise wird die Amin-Zahl gemäß DIN 16945 (Datum: März 1989) bestimmt.

Vorzugsweise weist das als polymeres Harz (P1) eingesetzte Polyamid ein zahlenmittleres Molekulargewicht in einem Bereich von 100 g/mol bis 5 000 g/mol, besonders bevorzugt in einem Bereich von 150 g/mol bis 4 000 g/mol, ganz besonders bevorzugt in einem Bereich von 200 g/mol bis 3 000 g/mol, insbesondere bevorzugt in einem Bereich von 250 g/mol bis 2 000 g/mol, auf, am meisten bevorzugt in einem Bereich von 400 g/mol bis 1 500 g/mol Dem Fachmann sind Methoden zur Bestimmung des zahlenmittleren Molekulargewichts bekannt. Die Bestimmung des zahlenmittleren Molekulargewichts erfolgt gemäß der nachstehenden Methode.

Vorzugsweise ist das erfindungsgemäß als polymeres Harz (P1) eingesetzte Polyamid erhältlich durch Umsetzung wenigstens einer Polycarbonsäure (C1a) mit wenigstens einem Polyamin (C1b), gegebenenfalls in Gegenwart wenigstens einer Monocarbonsäure, insbesondere wenigstens einer C₁₂-C₂₄-Monocarbonsäure, und/oder wenigstens eines Monoamins wie beispielsweis eines C₂-C₁₂-Monoamins.

Vorzugsweise ist das erfindungsgemäß als polymeres Harz (P1) eingesetzte Polyamid erhältlich durch Umsetzung wenigstens einer Polycarbonsäure (C1a) ausgewählt aus der Gruppe bestehend aus aliphatischen C₃-C₂₂-Dicarbonsäuren, Polymeren wie Dimeren und Trimeren von aliphatischen C₁₂-C₂₄-Monocarbonsäuren, und Mischungen davon, mit wenigstens einem aliphatischen C₂-C₁₂-Diamin (C1b).

Vorzugsweise wird die Umsetzung wenigstens einer Polycarbonsäure (C1a) und wenigstens eines Polyamins (C1b) in einem vorzugsweise organischen Lösemittel durchgeführt.

Vorzugsweise ist das erfindungsgemäß als polymeres Harz (P1) eingesetzte Polyamid erhältlich durch Umsetzung wenigstens einer Polycarbonsäure (C1a), vorzugsweise wenigstens einer Polycarbonsäure ausgewählt aus der Gruppe bestehend aus aliphatischen C₃-C₂₂-Dicarbonsäuren, Polymeren wie Dimeren und Trimeren von aliphatischen C₁₂-C₂₄-Monocarbonsäuren, und Mischungen davon, mit wenigstens einem Polyamin (C1b), vorzugsweise mit wenigstens einem aliphatischen C₂-C₁₂-Diamin (C1b), wobei das dann erhaltene Umsetzungsprodukt gegebenenfalls im Anschluss mit wenigstens einem vorzugsweise basischen Neutralisationsmittel kontaktiert wird. Dabei kann die Säure-Zahl des erhaltenen Umsetzungsprodukts durch Reaktion freier Carboxyl-Gruppen mit dem Neutralisationsmittel eingestellt werden, so dass eine Säure-Zahl < 10 mg KOH/g Umsetzungsprodukt erzielt werden kann.

Das erfindungsgemäß als polymeres Harz (P1) eingesetzte Polyamid ist kommerziell erhältlich: beispielhaft seien die kommerziell erhältlichen Produkte Thixatrol® P220X-MF, Disparlon® A6900-20X, Disparlon® A650-20X, Disparlon® A670-20M, Disparlon F-9030, Disparlon® 6900-20X, Luvotix® AB, Luvotix® PA 20 XA, Luvotix® R-RF, Luvotix® HT-SF, Luvotix® HAT 400, Luvotix® HT, Troythix® 250 XF, Byk-430, und Byk-431 genannt.

### Polymeres Harz (P2)

Jeder dem Fachmann bekannte übliche Polyester kann als polymeres Harz (P2) eingesetzt werden, solange dieser Polyester mindestens erhältlich ist durch Umsetzung wenigstens einer polymerisierten aliphatischen C₁₂-C₂₄-Monocarbonsäure mit wenigstens einem Diol und/oder Polyol. Bei dem entsprechenden Polyester kann es sich dabei um einen Polyester Homo- oder Copolymer handeln. Es kann auch eine Mischung aus zwei oder mehr voneinander verschiedenen Polyestern als polymere Harz-Komponente (P2) eingesetzt werden. Unter dem Begriff "mindestens erhältlich" wird diesbezüglich im Sinne der vorliegenden Erfindung verstanden, dass neben der wenigstens einer polymerisierten aliphatischen C₁₂-C₂₄-Monocarbonsäure und dem wenigstens einen Diol und/oder Polyol gegebenenfalls noch weitere Ausgangskomponenten zur Herstellung des Polyesters (P2) eingesetzt werden können wie beispielsweise wenigstens eine aliphatische C₁₂-C₂₄-Monocarbonsäure und/oder wie wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂-Tricarbonsäuren.

Das polymere Harz (P2) dient vorzugsweise als Emulgator, um das polymere Harz (P1) in eine wässrige Phase zu überführen.

Vorzugsweise weist der als polymeres Harz (P2) eingesetzte Polyester eine Säure-Zahl in einem Bereich von 20 bis 50 mg KOH pro g an Polyester auf. Besonders bevorzugt weist der als polymeres Harz (P2) eingesetzte Polyester eine Säure-Zahl in einem Bereich von 20 bis 45 mg KOH pro g an Polyester, ganz besonders bevorzugt in einem Bereich von 25 bis 40 mg KOH pro g an Polyester, insbesondere bevorzugt in einem Bereich von 30 bis 38 mg KOH pro g an Polyester, auf. Dem Fachmann sind Bestimmungsmetoden zur Ermittlung der Säure-Zahl bekannt. Die Bestimmung der Säure-Zahl erfolgt gemäß der nachstehend beschriebenen Methode.

Vorzugsweise weist der als polymeres Harz (P2) eingesetzte Polyester eine OH-Zahl (Hydroxyl-Zahl) in einem Bereich von 20 bis 300 mg KOH pro g an Polyester auf. Besonders bevorzugt weist der als polymeres Harz (P2) eingesetzte Polyester eine OH-Zahl in einem Bereich von 25 bis 250 mg KOH pro g an Polyester, ganz besonders bevorzugt in einem Bereich von 25 bis 200 mg KOH pro g an Polyester, insbesondere bevorzugt in einem Bereich von 25 bis 150 mg KOH pro g an Polyester oder in einem Bereich von 30 bis 120 mg KOH pro g an Polyester, auf. Dem Fachmann sind Bestimmungsmetoden zur Ermittlung der OH-Zahl bekannt. Die Bestimmung der OH-Zahl erfolgt gemäß der nachstehend beschriebenen Methode.

In einer anderen bevorzugten Ausführungsform weist der als polymeres Harz (P2) eingesetzte Polyester eine OH-Zahl von höchstens 300 mg KOH, besonders bevorzugt von höchstens 250 mg KOH, ganz besonders bevorzugt von höchstens 200 mg KOH, noch bevorzugter von höchstens 150 mg KOH, insbesondere bevorzugt von höchstens 120 mg KOH, jeweils pro g an Polyester auf.

Vorzugsweise weist der als polymeres Harz (P2) eingesetzte Polyester
eine Säure-Zahl in einem Bereich von 20 bis 50 mg KOH pro g an Polyester, besonders bevorzugt in einem Bereich von 20 bis 45 mg KOH pro g an Polyester, ganz besonders bevorzugt in einem Bereich von 25 bis 40 mg KOH pro g an Polyester, insbesondere bevorzugt in einem Bereich von 30 bis 38 mg KOH pro g an Polyester, und/oder
eine Hydroxyl-Zahl in einem Bereich von 20 bis 300 mg KOH pro g an Polyester, besonders bevorzugt in einem Bereich von 25 bis 250 mg KOH pro g an Polyester, ganz besonders bevorzugt in einem Bereich von 25 bis 200 mg KOH pro g an Polyester, insbesondere bevorzugt in einem Bereich von 25 bis 150 mg KOH pro g an Polyester oder in einem Bereich von 30 bis 120 mg KOH pro g an Polyester,
auf.

Vorzugsweise weist der als polymeres Harz (P2) eingesetzte Polyester ein zahlenmittleres Molekulargewicht in einem Bereich von 500 g/mol bis 100 000 g/mol, besonders bevorzugt in einem Bereich von 700 g/mol bis 90 000 g/mol, ganz besonders bevorzugt in einem Bereich von 1 000 g/mol bis 80 000 g/mol, insbesondere bevorzugt in einem Bereich von 1 000 g/mol bis 60 000 g/mol oder in einem Bereich von 2 000 g/mol bis 60 000 g/mol oder in einem Bereich von 2 000 g/mol bis 50 000 g/mol, am meisten bevorzugt in einem Bereich von 2 000 g/mol bis 10 000 g/mol oder in einem Bereich von 2 000 g/mol bis 6 000 g/mol auf. Dem Fachmann sind Methoden zur Bestimmung des zahlenmittleren Molekulargewichts bekannt. Die Bestimmung des zahlenmittleren Molekulargewichts erfolgt gemäß der nachstehenden Methode.

Der erfindungsgemäß als polymeres Harz (P2) eingesetzte Polyester ist mindestens erhältlich durch Umsetzung wenigstens einer polymerisierten aliphatischen C₁₂-C₂₄-Monocarbonsäure mit wenigstens einem Diol und/oder Polyol. Dabei können jeweils nicht nur die freien Säuren, sondern zudem entsprechende geeignete Derivate wie entsprechende Ester und/oder Anhydride sowie entsprechende Salze eingesetzt werden.

Unter dem Begriff "polymerisierte aliphatische C₁₂-C₂₄-Monocarbonsäure" wird im Sinne der vorliegenden Erfindung vorzugsweise ein Polymer, insbesondere ein Dimer und/oder Trimer einer aliphatischen C₁₂-C₂₄-Monocarbonsäure verstanden. Dieser Begriff ist dem Fachmann bekannt.

Dem Fachmann sind zudem Herstellungsverfahren zur Bereitstellung von Polymeren, insbesondere Dimeren und Trimeren, von aliphatischen C₁₂-C₂₄-Monocarbonsäuren, d.h. zur Bereitstellung von polymerisierten aliphatischen C₁₂-C₂₄-Monocarbonsäuren, wie beispielsweise dimerisierten, trimerisierten und/oder höher polymerisierten, insbesondere dimerisierten und/oder trimerisierten, aliphatischen C₁₂-C₂₄-Monocarbonsäuren bekannt, beispielsweise aus DE 25 06 211 A1, US 2,793,219 A und US 2,955,121 A. Die polymerisierten aliphatischen C₁₄-C₂₂-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Als Ausgangsmaterial zur Herstellung solcher polymerisierter aliphatischer C₁₂-C₂₄-Monocarbonsäuren werden wenigstens einfach ungesättigte aliphatische C₁₂-C₂₄-Monocarbonsäuren eingesetzt. Die erhaltenen polymerisierten wie dimerisierten und trimerisierten aliphatischen C₁₂-C₂₄-Monocarbonsäuren können jeweils mittels Destillation voneinander und zudem jeweils von höherwertigen Polymerisationsprodukten abgetrennt werden und gegebenenfalls weiteren Umsetzungsreaktionen wie beispielsweise Hydrierungen unterworfen werden.

Vorzugsweise ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte, insbesondere wenigstens eine dimerisierte, C₁₂-C₂₄-Monocarbonsäure.

Polymerisierte, insbesondere dimerisierte und trimerisierte C₁₂-C₂₄-Monocarbonsäuren sind kommerziell erhältlich. Beispiel für handelsübliche dimerisierte Fettsäuren sind die Produkte Empol 1003, Empol 1005, Empol 1008, Empol 1012, Empol 1016, Empol 1026, Empol 1028,Empol 1061, Empol 1062, Pripol 1006, Pripol 1009, Pripol 1012, Pripol 1013, Pripol 1017, Pripol 1022, Pripol 1025, Pripol 1027 der Firma Croda und für kommerziell erhältliche trimerisierte Fettsäuren die Produkte Empol 1043 von BASF und Pripol 1040 von Croda.

Unter dem Begriff "aliphatische C₁₂-C₂₄-Monocarbonsäure" wird im Sinne der vorliegenden Erfindung vorzugsweise eine gesättigte oder ungesättigte, vorzugsweise ungesättigte, aliphatische C₁₂-C₂₄-Monocarbonsäure mit insgesamt 12-24, d.h. 12, 13, 14, 15, 16, 17, 18, 19, 20, 21, 22, 23 oder 24 Kohlenstoffatomen, vorzugsweise eine aliphatische C₁₄-C₂₂-Monocarbonsäure mit insgesamt 14-22, d.h. 14, 15, 16, 17, 18, 19, 20, 21 oder 22 Kohlenstoffatomen, oder eine aliphatische C₁₆-C₂₀-Monocarbonsäure mit insgesamt 16-20, d.h. 16, 17, 18, 19 oder 20 Kohlenstoffatomen, verstanden, die jeweils genau eine -C(=O)-OH-Gruppe aufweist, d.h. eine aliphatische C₁₂-C₂₄-Monocarbonsäure, die neben dieser einen -C(=O)-OH-Gruppe einen C₁₁-C₂₃-aliphatischen Rest mit insgesamt 11-23, d.h. 11, 12, 13, 14, 15, 16, 17, 18, 19, 20, 21, 22 oder 23 Kohlenstoffatomen, vorzugsweise einen C₁₃-C₂₁-aliphatischen Rest mit insgesamt 13-21, d.h. 13, 14, 15, 16, 17, 18, 19, 20 oder 21 Kohlenstoffatomen oder einen C₁₅-C₁₉-aliphatischen Rest mit insgesamt 15-19, d.h. 15, 16, 17, 18 oder 19 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatische C₁₂-C₂₄-Monocarbonsäure können natürliche oder synthetisch erzeugte Fettsäuren sein. Die aliphatischen C₁₂-C₂₄-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind aliphatische C₁₂-C₂₄-Monocarbonsäure ausgewählt aus der Gruppe bestehend aus Myristinsäure, Pentadecansäure, Palmitinsäure, Margarinsäure, Stearinsäure, Nonadecansäure, Arachinsäure, Henicosansäure, Docosansäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Linolsäure, Linolensäure, Calendulasäure, Punicinsäure, Elaeostearinsäure, Arachidonsäure, Timnodonsäure, Clupanodonsäure und Cervonsäure sowie Ricinolsäure. Vorzugsweise sind aliphatische C₁₆-C₂₀-Monocarbonsäuren ausgewählt aus der Gruppe bestehend aus Palmitinsäure, Margarinsäure, Stearinsäure, Nonadecansäure, Arachinsäure, Palmitoleinsäure, Petroselinsäure, Ölsäure, Elaidinsäure, Vaccensäure, Gadoleinsäure, Icosensäure, Linolsäure, Linolensäure, Calendulasäure, Punicinsäure, Elaeostearinsäure, Arachidonsäure und Timnodonsäure sowie Ricinolsäure. Vorzugsweise sind aliphatische C₁₈-Monocarbonsäure ausgewählt aus der Gruppe bestehend aus Stearinsäure, Petroselinsäure, Ölsäure, Elaidinsäure, Vaccensäure, Linolsäure, Linolensäure, Calendulasäure, Punicinsäure und Elaeostearinsäure sowie Ricinolsäure, insbesondere ausgewählt aus der Gruppe bestehend aus Stearinsäure, Ölsäure, Linolsäure und Linolensäure sowie Ricinolsäure, am meisten bevorzugt ausgewählt aus der Gruppe bestehend aus Ölsäure, Linolsäure und Linolensäure sowie Ricinolsäure.

Vorzugsweise ist der als polymeres Harz (P2) eingesetzte Polyester mindestens erhältlich durch Umsetzung wenigstens einer aliphatischen polymerisierten, vorzugsweise wenigstens einer dimerisierten und/oder trimerisierten, aliphatischen C₁₂-C₂₄-Monocarbonsäure und gegebenenfalls wenigstens einer aliphatischen C₁₂-C₂₄-Monocarbonsäure mit wenigstens einem C₂-C₂₀-Polyol und/oder C₂-C₂₀-Diol.

Vorzugsweise liegen die aus der wenigstens einen zur Herstellung des als polymeren Harzes (P2) eingesetzten Polyesters eingesetzten polymerisierte aliphatische C₁₂-C₂₄-Monocarbonsäure erhältlichen Struktureinheiten in dem Polyester in einer Menge in einem Bereich von 10 bis 40 mol-%, bezogen auf das Gesamtgewicht des Polyesters, vor. Besonders bevorzugt ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte C₁₂-C₂₄-Monocarbonsäure und die daraus erhältlichen Struktureinheiten liegen in dem Polyester in einer Menge in einem Bereich von 10 bis 80 mol-%, vorzugsweise 10 bis 60 mol-%, besonders bevorzugt 10 bis 40 mol-%, bezogen auf das Gesamtgewicht des Polyesters, vor. Einem Fachmann ist dabei klar, dass die eingesetzte polymerisierte aliphatische C₁₂-C₂₄-Monocarbonsäure dabei nicht vollständig in den Polyester integriert wird, sondern es bei der Reaktion des wenigstens einen Polyols und/oder Diols mit der wenigstens einen polymerisierten aliphatischen C₁₂-C₂₄-Monocarbonsäure erst unter Wasserabspaltung durch Ausbildung von Esterbindungen zum Aufbau der in dem Polyester vorhandenen Struktureinheiten kommt. Besonders bevorzugt ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte C₁₂-C₂₄-Monocarbonsäure und die daraus erhältliche Struktureinheit liegt in dem Polyester in einer Menge in einem Bereich von 12 bis 38 mol-%, ganz besonders bevorzugt in einem Bereich von 14 bis 36 mol-% oder in einem Bereich von 16 bis 34 mol-% oder in einem Bereich von 18 bis 32 mol-% oder in einem Bereich von 20 bis 30 mol-% oder in einem Bereich von 22 bis 28 mol-%, insbesondere bevorzugt in einem Bereich von 23 bis 26 mol-%,jeweils bezogen auf das Gesamtgewicht des Polyesters, vor.

Unter dem Begriff "Polyol" wird im Sinne der vorliegenden Erfindung vorzugsweise eine Komponente verstanden, welche wenigstens drei vorzugsweise primäre Hydroxyl-Gruppen aufweist. Insgesamt kann ein Polyol jedoch vorzugsweise bis zu einschließlich 10 Hydroxyl-Gruppen aufweisen, d.h. zusätzlich zu den wenigstens zwei primären Hydroxyl-Gruppen noch bis zu einschließlich 8 weitere, Hydroxyl-Gruppen enthalten. Von dem Begriff "Polyol" sind somit insbesondere Triole umfasst. Ein "Polyol" im Sinne der vorliegenden Erfindung kann ein (hetero)aliphatisches, (hetero)cycloaliphatisches oder (hetero)aromatisches Polyol sein. Vorzugsweise wird als Polyol ein aliphatisches vorzugsweise gesättigtes Polyol eingesetzt. Vorzugsweise ist das Polyol ein Triol. Vorzugsweise weisen die erfindungsgemäß eingesetzten Polyole 2 bis 20, besonders bevorzugt 2 bis 12, Kohlenstoffatome pro Molekül auf, d.h. es handelt sich vorzugsweise um C₂-C₂₀-Polyole, besonders bevorzugt um C₂-C₁₂-Polyole. Das Polyol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann.

Unter dem Begriff "Diol" wird im Sinne der vorliegenden Erfindung vorzugsweise eine Komponente verstanden, welche zwei vorzugsweise primäre Hydroxyl-Gruppen aufweist. Ein "Diol" im Sinne der vorliegenden Erfindung kann ein (hetero)aliphatisches, (hetero)cycloaliphatisches oder (hetero)aromatisches Diol sein. Vorzugsweise wird als Diol ein aliphatisches vorzugsweise gesättigtes Diol eingesetzt. Vorzugsweise weisen die erfindungsgemäß eingesetzten Diole 2 bis 20, besonders bevorzugt 2 bis 12, Kohlenstoffatome pro Molekül auf, d.h. es handelt sich vorzugsweise um C₂-C₂₀- Diole, besonders bevorzugt um C₂-C₁₂- Diole. Das Diol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann.

Besonders bevorzugt ist das zur Herstellung des erfindungsgemäß als polymeren Harzes (P2) eingesetzten Polyesters eingesetzten Diols und/oder Polyols ausgewählt aus der Gruppe bestehend aus aliphatischen C₂-C₂₀-Polyolen und/oder aliphatischen C₂-C₂₀-Diolen. Ganz besonders bevorzugt ist das zur Herstellung des erfindungsgemäß als polymeren Harzes (P2) eingesetzten Polyesters eingesetzten Diols ausgewählt aus der Gruppe bestehend aus aliphatischen C₂-C₁₂-Diolen.

Unter dem Begriff "aliphatisches C₂-C₂₀-Polyol" bzw. "aliphatisches C₂-C₂₀-Diol" wird im Sinne der vorliegenden Erfindung vorzugsweise ein gesättigtes oder ungesättigtes, vorzugsweise ein gesättigtes, aliphatisches C₂-C₂₀-Polyol bzw. C₂-C₂₀-Diol mit insgesamt 2-20, d.h. 2, 3, 4, 5, 6, 7, 8, 9, 10, 11, 12, 13, 14, 15, 16, 17, 18, 19, oder 20, Kohlenstoffatomen, vorzugsweise ein aliphatisches C₂-C₁₂-Polyol bzw. aliphatisches C₂-C₁₂-Diol mit insgesamt 2-12, d.h. 2, 3, 4, 5, 6, 7, 8, 9, 10, 11 oder 12 Kohlenstoffatomen, verstanden, das jeweils genau zwei vorzugsweise endständige-OH-Gruppen aufweist. Der Ausdruck "aliphatisch" umfasst dabei vorzugsweise acyclische gesättigte oder ungesättigte, vorzugsweise gesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Das aliphatische C₂-C₂₀-Polyol bzw. C₂-C₂₀-Diol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind die aliphatischen C₂-C₂₀-Polyole ausgewählt aus der Gruppe bestehend aus Ethylenglykol, Propylenglykol (1,2-Propandiol), Trimethylenglykol (1,3-Propandiol), 1,4-Dihydroxybutan (1,4-Butandiol), 1,5-Dihydroxypentan, 1,6-Dihydroxyhexan (1,6-Hexandiol), Neopentylgylkol, und 1,1,1-Trimethylolpropan (TMP). Vorzugsweise sind die aliphatischen C₂-C₂₀-Diole ausgewählt aus der Gruppe bestehend aus Ethylenglykol, Propylenglykol (1,2-Propandiol), Trimethylenglykol (1,3-Propandiol), 1,4-Dihydroxybutan (1,4-Butandiol), 1,5-Dihydroxypentan, 1,6-Dihydroxyhexan (1,6-Hexandiol) und Neopentylgylkol.

Zur Herstellung des als polymeren Harzes (P2) eingesetzten Polyesters kann gegebenenfalls - neben der wenigstens einen polymerisierten aliphatischen C₁₂-C₂₄-Monocarbonsäure und dem wenigstens einen Diol und/oder Polyol - zudem wenigstens eine aliphatische C₁₂-C₂₄-Monocarbonsäure, vorzugsweise wenigstens eine aliphatische C₁₆-C₂₀-Monocarbonsäure, eingesetzt werden. Dabei können die gleichen aliphatischen C₁₂-C₂₄-Monocarbonsäuren eingesetzt werden, die sich auch zur Herstellung von aliphatischen polymerisierten C₁₂-C₂₄-Monocarbonsäuren eignen. Insbesondere eignen sich hierfür wenigstens eine solche aliphatische C₁₂-C₂₄-Monocarbonsäure, vorzugsweise wenigstens eine solche aliphatische C₁₆-C₂₀-Monocarbonsäure, die wenigstens einfach ungesättigt ist und/oder deren aliphatischer Rest mit wenigstens einer OH-Gruppe substituiert ist. Ein Beispiel einer solchen aliphatischen C₁₂-C₂₄-Monocarbonsäure ist Ricinolsäure. Gegebenenfalls wird wenigstens eine zur Herstellung des als polymeren Harzes (P2) eingesetzten Polyesters eingesetzte aliphatische C₁₂-C₂₄-Monocarbonsäure eingesetzt und die daraus erhältliche Struktureinheit liegt in dem Polyester in einer Menge in einem Bereich von 0 bis 20 mol-%, ganz besonders bevorzugt in einem Bereich von 0 bis 10 mol-%, jeweils bezogen auf das Gesamtgewicht des Polyesters, vor.

Zur Herstellung des als polymeres Harz (P2) eingesetzten Polyesters kann gegebenenfalls wenigstens eine weitere Komponente eingesetzt werden. Vorzugsweise wird zur Herstellung des als polymeren Harzes (P2) eingesetzten Polyesters zudem wenigstens eine Dicarbonsäure und/oder wenigstens eine Tricarbonsäure - oder geeignete einsetzbare Derivate davon wie beispielsweise entsprechende Anhydride und/oder Ester - ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren, und aromatischen C₉-C₁₂-Tricarbonsäuren eingesetzt, besonders bevorzugt ausgewählt aus der Gruppe bestehend aus cycloaliphatischen C₅-C₁₂-Dicarbonsäuren und aromatischen C₉-C₁₂-Tricarbonsäuren und aromatischen C₈-C₁₂-Dicarbonsäuren. Vorzugsweise enthält der als polymeres Harz (P2) eingesetzte Polyester 3 bis 40 mol-%, besonders bevorzugt 5 bis 30 mol-%, bezogen auf den Gesamtanteil von 100 mol-% aller Struktureinheiten des Polyesters, an Struktureinheiten, die aus dem Einsatz von wenigstens einer Dicarbonsäure und/oder wenigstens einer Tricarbonsäure zur Herstellung des Polyesters resultieren.

Vorzugsweise wird zur Herstellung des als polymeren Harzes (P2) eingesetzten Polyesters zudem wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂-Tricarbonsäuren, und gegebenenfalls zudem wenigstens eine aliphatische C₁₂-C₂₄-Monocarbonsäure eingesetzt.

Unter dem Begriff "aliphatische C₃-C₁₂-Dicarbonsäure" wird im Sinne der vorliegenden Erfindung vorzugsweise eine gesättigte oder ungesättigte, vorzugsweise gesättigte, aliphatische C₃-C₁₂-Dicarbonsäure mit insgesamt 3 bis 12, d.h. 3, 4, 5, 6, 7, 8, 9, 10, 11 oder 12 Kohlenstoffatomen, verstanden, die jeweils genau zwei -C(=O)-OH-Gruppen aufweist, d.h. beispielsweise eine aliphatische C₃-C₂₂-Dicarbonsäure, die neben diesen zwei -C(=O)-OH-Gruppen einen C₁-C₂₀-aliphatischen Rest mit insgesamt 1 bis 20 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dem Fachmann ist klar, dass, eine ungesättigte Bindung innerhalb der C₃-C₂₂-Dicarbonsäure dabei erst ab C₄-C₂₂-Dicarbonsäuren möglich ist. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatischen C₃-C₂₂-Dicarbonsäure können natürliche oder synthetisch erzeugte Dicarbonsäuren sein. Die aliphatischen C₃-C₂₂-Dicarbonsäure können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind aliphatische C₃-C₂₂-Dicarbonsäuren ausgewählt aus der Gruppe bestehend aus Malonsäure, Bernsteinsäure, Glutarsäure, Adipinsäure, Pimelinsäure, Suberinsäure, Azelainsäure, Sebacinsäure, Undecandicarbonsäure, Dodecandicarbonsäure, Tridecandicarbonsäure, Tetradecandicarbonsäure und Hexadecandicarbonsäure.

Aliphatische C₅-C₁₂-Tricarbonsäuren weisen im Unterschied zu den aliphatischen C₃-C₁₂-Dicarbonsäuren wenigstens 5 Kohlenstoffatome auf und drei statt zwei Carboxyl-Gruppen.

Unter dem Begriff "cycloaliphatische C₅-C₁₂-Dicarbonsäure" wird im Sinne der vorliegenden Erfindung vorzugsweise eine gesättigte oder ungesättigte, vorzugsweise gesättigte, cycloaliphatische C₅-C₁₂-Dicarbonsäure mit insgesamt 5-12, d.h. 5, 6, 7, 8, 9, 10, 11, oder 12 Kohlenstoffatomen, verstanden, die jeweils genau zwei -C(=O)-OH-Gruppen aufweist, d.h. beispielsweise eine cycloaliphatische C₅-C₁₂-Dicarbonsäure, die neben diesen zwei -C(=O)-OH-Gruppen einen C₃-C₁₀-cycloaliphatischen Rest mit insgesamt 3 bis 10 Kohlenstoffatomen, aufweist. Der Ausdruck "cycloaliphatisch" umfasst dabei vorzugsweise cyclische gesättigte oder ungesättigte, vorzugsweise ungesättigte, cycloaliphatische Reste. Die cycloaliphatischen C₅-C₁₂-Dicarbonsäure können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind cycloaliphatischen C₅-C₁₂-Dicarbonsäuren ausgewählt aus der Gruppe bestehend aus Hexahydrophthalsäure bzw. Hexahydrophthalsäureanhydrid, Hexahydroterephthalsäure bzw. Hexahydroterephthalsäureanhydrid, Hexahydroisophthalsäure bzw. Hexahydroisophthalsäureanhydrid. Cycloaliphatische C₆-C₁₂-Tricarbonsäuren weisen im Unterschied zu den cycloaliphatischen C₅-C₁₂-Dicarbonsäuren wenigstens 6 Kohlenstoffatome auf und drei statt zwei Carboxyl-Gruppen.

Unter dem Begriff "aromatische C₈-C₁₂-Dicarbonsäure" wird im Sinne der vorliegenden Erfindung vorzugsweise eine aromatische C₈-C₂₂-Dicarbonsäure mit insgesamt 8-12, d.h. 8, 9, 10, 11, oder 12 Kohlenstoffatomen, verstanden, die jeweils genau zwei -C(=O)-OH-Gruppen aufweisen, d.h. beispielsweise eine aromatische C₈-C₁₂-Dicarbonsäure, die neben diesen zwei -C(=O)-OH-Gruppen einen C₆-C₁₀-aromatischen Rest mit insgesamt 6 bis 10 Kohlenstoffatomen, aufweist. Die aromatischen C₈-C₁₂-Dicarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind die aromatischen C₈-C₁₂-Dicarbonsäuren ausgewählt aus der Gruppe bestehend aus Terephthalsäure, Isophthalsäure, ortho-Phthalsäure und/oder Trimellitsäure bzw. deren Anhydriden und/oder Estern. Aromatische C₉-C₁₂-Tricarbonsäuren weisen im Unterschied zu den aromatischen C₈-C₁₂-Dicarbonsäuren wenigstens 9 Kohlenstoffatome auf und drei statt zwei Carboxyl-Gruppen.

Dem Fachmann sind geeignete als polymeres Harz (P2) einsetzbare Polyester und deren Herstellung beispielsweise aus der DE 40 09 858 A1 bekannt.

### Verwendung der wässrigen Dispersion als Rheologiehilfsmittel

Ein weiterer Gegenstand der vorliegenden Erfindung ist eine Verwendung der erfindungsgemäßen Dispersion (P) als Rheologiehilfsmittel in wässrigen Beschichtungszusammensetzungen. Unter "Rheologiehilfsmittel" werden im Sinne der vorliegenden Erfindung vorzugsweise Rheologiehilfsmittel ausgewählt aus der Gruppe bestehend aus Thixotropiermitteln, Verdickungsmitteln und Verlaufhilfsmitteln und Mischungen davon, besonders bevorzugt Verdickungsmitteln, verstanden.

Alle im Zusammenhang mit der erfindungsgemäßen wässrigen Dispersion (P) hierin zuvor beschriebene bevorzugte Ausführungsformen sind auch bevorzugte Ausführungsformen hinsichtlich einer Verwendung dieser erfindungsgemäßen wässrigen Dispersion (P) als Rheologiehilfsmittel in wässrigen Beschichtungszusammensetzungen.

### Beschichtungszusammensetzung

Die erfindungsgemäße wässrige Dispersion (P) eignet sich als Komponente in einer wässrigen Beschichtungszusammensetzung, welche insbesondere zur zumindest teilweisen Beschichtung eines gegebenenfalls beschichteten Substrats mit einer Basislackschicht eingesetzt werden kann.

Ein weiterer Gegenstand der vorliegenden Erfindung ist daher eine wässrige Beschichtungszusammensetzung umfassend
die erfindungsgemäße wässrige Dispersion (P) umfassend wenigstens ein polymeres Harz (P1) und wenigstens ein davon verschiedenes polymeres Harz (P2),
wenigstens ein Bindemittel (A) umfassend wenigstens ein polymeres Harz (A1), welches von den polymeren Harzen (P1) und (P2) verschieden ist, und gegebenenfalls wenigstens ein Vernetzungsmittel (A2), und
wenigstens ein Pigment (B)
zur zumindest teilweisen Beschichtung eines gegebenenfalls beschichteten Substrats mit einer Basislackschicht.

Vorzugsweise ist die erfindungsgemäße wässrige Beschichtungszusammensetzung daher eine wässrige Basislackzusammensetzung, d.h. eine Beschichtungszusammensetzung, die sich zur Herstellung einer wässrigen Basislackschicht eignet. Der Begriff "Basislack" ist dem Fachmann bekannt und beispielsweise definiert im Römpp Lexikon, Lacke und Druckfarben, Georg Thieme Verlag 1998.

Vorzugsweise addieren sich die Anteile in Gew.-% der in der erfindungsgemäßen Beschichtungszusammensetzung enthaltenen Komponenten (P1), (P2), (A1), (B), Wasser sowie der gegebenenfalls vorhandenen Komponenten (C) und/oder (D) und/oder (E) sowie gegebenenfalls vorhandener organischer Lösemittel und/oder gegebenenfalls vorhandener Komponente (A2) auf 100 Gew.-%, bezogen auf das Gesamtgewicht der Beschichtungszusammensetzung.

Der Begriff "umfassend" im Sinne der vorliegenden Erfindung im Zusammenhang mit der erfindungsgemäßen Beschichtungszusammensetzung hat in einer bevorzugten Ausführungsform die Bedeutung "bestehend aus". Dabei können hinsichtlich der erfindungsgemäßen Beschichtungszusammensetzung in dieser bevorzugten Ausführungsform eine oder mehrere der weiteren nachstehend genannten optional in der erfindungsgemäß eingesetzten Beschichtungszusammensetzung enthaltenen Komponenten in der Beschichtungszusammensetzung enthalten sein wie zum Beispiel - neben den Komponenten Wasser, (P1), (P2), (A1) und (B) - zudem gegebenenfalls (A2) und/oder (C) und/oder (D) und/oder (E) und/oder organische(s) Lösemittel. Alle Komponenten können dabei jeweils in ihren vorstehend und nachstehend genannten bevorzugten Ausführungsformen in der erfindungsgemäßen Beschichtungszusammensetzung enthalten sein.

Die erfindungsgemäße wässrige Beschichtungszusammensetzung enthält als flüssiges Verdünnungsmittel Wasser.

Unter dem Begriff "wässrig" im Zusammenhang mit der erfindungsgemäßen Beschichtungszusammensetzung werden vorzugsweise solche flüssigen Beschichtungszusammensetzungen verstanden, die - als flüssiges Verdünnungsmittel, d.h. als flüssiges Lösemittel und/oder Dispergiermittel - Wasser als Hauptkomponente enthalten. Gegebenenfalls können die erfindungsgemäßen Beschichtungszusammensetzungen jedoch organische Lösemittel in bestimmten Anteilen enthalten. Als Beispiele für solche organischen Lösemittel seien (hetero)cyclische, (hetero)aliphatische oder (hetero)aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt.

Vorzugsweise beträgt der Anteil dieser organischen Lösemittel höchstens 40,0 Gew.-%, besonders bevorzugt höchstens 35,0 Gew.-%, ganz besonders bevorzugt höchstens 30,0 Gew.-%, insbesondere höchstens 25,0 Gew.-% oder höchstens 20,0 Gew.-% oder höchstens 15,0 Gew.-%, noch bevorzugter höchstens 10,0 Gew.-%, jeweils bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln. Insbesondere liegt der Anteil an organischen Lösemitteln in der erfindungsgemäßen Beschichtungszusammensetzung höchstens in einem Bereich von 10,0 Gew.-% bis 40,0 Gew.-%, bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln.

Vorzugsweise weist die erfindungsgemäße Beschichtungszusammensetzung einen nicht-flüchtigen Anteil im Bereich von 10 bis 50 Gew.-%, besonders bevorzugt im Bereich von 10 bis 45 Gew.-%, ganz besonders bevorzugt im Bereich von 10 bis 40 Gew.-%, bezogen auf das Gesamtgewicht der Beschichtungszusammensetzung auf.

### Bindemittel (A)

Das in der erfindungsgemäßen wässrigen Beschichtungszusammensetzung eingesetzte Bindemittel (A) ist vorzugsweise ein in Wasser lösbares oder dispergierbares Bindemittel.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile einer Beschichtungszusammensetzung mit Ausnahme von darin enthaltenen Pigmenten (B) und gegebenenfalls vorhandenen Füllstoffen verstanden, insbesondere die für die Filmbildung verantwortlichen polymeren Harze. Der nicht-flüchtige Anteil kann gemäß nachstehend beschriebener Methode bestimmt werden.

Als polymere Harze (A1) eignen sich alle üblichen dem Fachmann bekannten polymeren Harze (A1) wie selbstvernetzende und nicht-selbstvernetzende polymere Harze (A1). Werden nicht-selbstvernetzende polymere Harze (A1) eingesetzt, so kann das erfindungsgemäß eingesetzte Bindemittel (A) zudem ein Vernetzungsmittel (A2) aufweisen. Geeignete polymere Harze (A1) einschließlich gegebenenfalls vorhandener Vernetzungsmittel (A2) sind beispielsweise aus EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 und WO 2005/021168 A1, insbesondere aus EP 0 228 003 A1, DE 199 48 004 A1, DE 40 09 858 A1 und DE 44 37 535 A1 bekannt.

Vorzugsweise umfasst das Bindemittel (A) wenigstens ein polymeres Harz (A1), welches gegebenenfalls reaktive funktionelle Gruppen aufweist, die eine Vernetzungsreaktion ermöglichen.

Das polymere Harz (A1) ist vorzugsweise von den polymeren Harzen (P1) und (P2) verschieden.

Das polymere Harz (A1) des erfindungsgemäß eingesetzten Bindemittels (A) weist vorzugsweise vernetzbare reaktive funktionelle Gruppen auf. Jede übliche dem Fachmann bekannte vernetzbare reaktive funktionelle Gruppe kommt dabei in Betracht. Vorzugsweise weist das wenigstens eine polymere Harz des Bindemittels (A) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Carbamat-Gruppen, Gruppen, welche wenigstens eine C=C-Doppelbindung aufweisen, wie beispielsweise VinylGruppen oder (Meth)acrylat-Gruppen, und Epoxid-Gruppen auf. Vorzugsweise weist das polymere Harz (A1) des Bindemittels (A) funktionelle Hydroxyl-Gruppen auf.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Weist das polymere Harz (A1) des Bindemittels (A) vernetzbare funktionelle Gruppen wie Hydroxyl-Gruppen auf, so liegt der Anteil an vernetzbaren funktionellen Gruppen wie Hydroxyl-Gruppen vorzugsweise im Bereich von 0,1 Gew.-% bis 7,0 Gew.-%, besonders bevorzugt von 0,25 bis 6,5 Gew.-%, ganz besonders bevorzugt von 0,50 bis 6,0 Gew.-%, insbesondere von 0,75 bis 5,5 Gew.-%, jeweils bezogen auf das Gesamtgewicht des Festkörpergehalts des polymeren Harzes (A1) des Bindemittels (A) auf.

Das polymere Harz (A1) und das gegebenenfalls vorhandenen Vernetzungsmittel (A2) sind exotherm oder endotherm vernetzbar bzw. härtbar. Das polymere Harz (A1) und das gegebenenfalls vorhandene Vernetzungsmittel (A2) sind insbesondere thermisch vernetzbar bzw. härtbar. Vorzugsweise sind das polymere Harz (A1) und das gegebenenfalls vorhandene Vernetzungsmittel (A2) in einem Temperaturbereich von -20°C bis zu 250°C vernetzbar bzw. härtbar. Vorzugsweise sind das polymere Harz (A1) und das gegebenenfalls vorhandene Vernetzungsmittel (A2) bei Raumtemperatur oder bei Temperaturen im Bereich von 15°C bis 80°C vernetzbar. Unter Raumtemperatur wird im Sinne der vorliegenden Erfindung vorzugsweise eine Temperatur im Bereich von 18°C bis 23°C verstanden. Alternativ sind das polymere Harz (A1) und das gegebenenfalls vorhandene Vernetzungsmittel (A2) erst bei höheren Temperaturen vernetzbar, beispielsweise bei Temperaturen ≥ 80°C, bevorzugter ≥ 110°C, besonders bevorzugt ≥ 140°C oder ≥ 150°C vernetzbar.

Besonders vorteilhaft sind das polymere Harz (A1) und das gegebenenfalls vorhandene Vernetzungsmittel (A2) bei 50 bis 150°C, noch bevorzugter bei 70 bis 150°C und besonders bevorzugt bei 80 bis 150°C vernetzbar.

Vorzugsweise umfasst das Bindemittel (A) wenigstens ein polymeres Harz (A1) ausgewählt aus der Gruppe bestehend aus Polyurethanen, Polyestern, Polyamiden, Polyharnstoffen, Polystyrolen, Polycarbonaten, Poly(meth)acrylaten, Vinylesterbasierten Harzen, Epoxidharzen, Phenol-Formaldehydharzen, Melamin-Formaldehydharzen, Phenolharzen und Silikonharzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch Copolymere verstanden. Diese Harze sowie ihre Herstellung sind dem Fachmann bekannt. Geeignete Polyester sind beispielsweise aus DE 40 09 858 A1 bekannt. Geeignete Polyurethane sind beispielsweise aus DE 199 48 004 A1 und aus EP 0 228 003 A1 bekannt. Der Begriff Polyurethane schließt vorzugsweise insbesondere Polyurethanpoly(meth)acrylate, d.h. polyurethanmodifizierte Poly(meth)acrylate mit ein. Solche Polyurethanpoly(meth)acrylate sind dem Fachmann beispielsweise aus DE 44 37 535 A1 bekannt.

Vorzugsweise umfasst das Bindemittel (A) wenigstens ein polymeres Harz (A1) ausgewählt aus der Gruppe bestehend aus Polyurethanen, Polyharnstoffen, Polyestern und Poly(meth)acrylaten, insbesondere ausgewählt aus der Gruppe bestehend aus Polyurethanen und Poly(meth)acrylaten wobei vorzugsweise 70 bis 100 Gew.-% des polymeren Harzes des Bindemittels aus wenigstens einem der vorstehend genannten Polymeren ausgewählt sind.

Es können auch mehrere verschiedene polymere Harze (A1) im Bindemittel (A) vorhanden sein, beispielsweise zwei oder drei jeweils voneinander verschiedene polymere Harze (A1).

In einer besonders bevorzugten Ausführungsform umfasst das Bindemittel (A) als polymeres Harz (A1) wenigstens ein Polyurethan, wobei vorzugsweise 70 bis 100 Gew.-% des polymeren Harzes ein solches Polyurethan darstellen, und/oder als polymeres Harz (A1) wenigstens ein Poly(meth)acrylat, wobei vorzugsweise 70 bis 100 Gew.-% des polymeren Harzes aus einem solchen Poly(meth)acrylat ausgewählt sind, und/oder als polymeres Harz (A1) wenigstens einen Polyester, wobei vorzugsweise 70 bis 100 Gew.-% des polymeren Harzes aus einem solchen Polyester ausgewählt sind.

Das Bindemittel (A) kann ein polymeres Harz (A1) umfassen, welches unter Beteiligung von Isocyanat-Gruppen und/oder oligomerisierten oder polymerisierten Isocyanat-Gruppen ausgehärtet bzw. vernetzt wird, ganz besonders bevorzugt wenigstens ein entsprechendes Polyurethan und/oder einen Polyester und/oder ein Poly(meth)acrylat.

Umfasst das Bindemittel (A) wenigstens ein Polyurethan als polymeres Harz (A1), so eignen sich insbesondere Polyurethan-basierte Harze, die durch eine Polyadditionsreaktion zwischen hydroxylgruppenhaltigen Verbindungen wie Polyolen einschließlich Diolen (wie z.B. Hydroxylgruppen von hydroxylgruppenhaltigen Polyestern oder hydroxylgruppenhaltigen Polyethern sowie Mischungen und Copolymeren davon) und wenigstens einem Isocyanat oder Polyisocyanat (einschließlich aromatischer und aliphatischer Isocyanate, Di-, Tri- und/oder Polyisocyanate) hergestellt werden. Dabei ist üblicherweise ein stöchiometrischer Umsatz der OH-Gruppen der Polyole mit den Isocyanat-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Neben einer Reaktion von Isocyanat-Gruppen mit OH-Gruppen kann als weitere Reaktion zur Vernetzung z.B. auch die Di- und Trimerisierung von Isocyanaten (zu Uretdionen oder Isocyanuraten) auftreten. Als Polyisocyanate bzw. Isocyanate eignen sich alle als Vernetzungsmittel (A2) genannten einsetzbaren Isocyanate bzw. Polyisocyanate.

Umfasst das Bindemittel (A) wenigstens ein Polyurethan als polymeres Harz (A1), so eignet sich zu dessen Herstellung vorzugsweise ein Polyester-Polyol als Präpolymer-Polyol-Komponente. Als Polyester-Polyole eignen sich insbesondere solche Verbindungen, die sich von wenigstens einem Polyol wie wenigstens einem Diol, beispielsweise Ethylenglykol, Propylenglykol (1,2-Propandiol), Trimethylenglykol (1,3-Propandiol), Neopentylgylkol, 1,4-Butandiol und/oder 1,6-Hexandiol, oder wie wenigstens einem Triol wie 1,1,1-Trimethylolpropan (TMP), und wenigstens einer Dicarbonsäure wie beispielsweise Adipinsäure, Terephthalsäure, Isophthalsäure, ortho-Phthalsäure und/oder Dimethylolpropionsäure und/oder wenigstens einem Dicarbonsäurederivat wie einem Dicarbonsäureester und/oder einem Dicarbonsäureanhydrid wie Phthalsäureanhydrid, ableiten. Insbesondere bevorzugt ist ein solches als Präpolymer-Polyol-Komponente eingesetztes Polyester-Polyol, welches sich von wenigstens einem Diol und/oder Triol ausgewählt aus der Gruppe bestehend aus 1,6-Hexandiol, Neopentylglycol, Trimethylolpropan und Mischungen davon, und wenigstens einer Dicarbonsäure (oder wenigstens einem Dicarbonsäurederivat davon) ausgewählt aus der Gruppe bestehend aus Adipinsäure, Terephthalsäure, Isophthalsäure, ortho-Phthalsäure Dimethylolpropionsäure und Mischungen davon, ableitet. Vorzugsweise wird wenigstens ein solches Polyester-Polyol mit wenigstens einem Vernetzungsmittel (A2), insbesondere mit wenigstens einem Polyisocyanat wie HDI oder IPDI zur Herstellung des Polyurethan-Harzes eingesetzt, welches vom Bindemittel (A) umfasst wird.

Um eine Lösung oder Dispersion eines solchen Polyurethan-Harzes und/oder Polyharnstoff-Harzes in Wasser zu ermöglichen, werden üblicherweise zur Stabilisierung der Dispersion in die Polyurethan-Kette bzw. Polyharnstoff-Kette ionische und/oder hydrophile Segmente eingebaut. Als Weichsegmente im Fall von Polyurethanen können bevorzugt 20 bis 100 mol % an höhermolekularen Diolen, bezogen auf die Menge aller Diole, bevorzugt Polyesterdiolen, mit einem zahlenmittleren Molekulargewicht Mₙ von 500 bis 5000 g/mol, bevorzugt von 1000 bis 3000 g/mol eingesetzt werden. Die Bestimmung des zahlenmittleren Molekulargewichts erfolgt gemäß der nachstehend beschriebenen Methode.

Umfasst das Bindemittel (A) wenigstens einen Polyester als polymeres Harz (A1), so können die im Zusammenhang mit der Herstellung der Polyurethan-Harze genannten Polyester-Polyole als Polyester-Komponente eingesetzt werden.

Umfasst das Bindemittel (A) wenigstens ein Poly(meth)acrylat-basiertes polymeres Harz als polymeres Harz (A1), so eignen sich zu deren Herstellung insbesondere Monomer- oder Oligomer-Gemische von Estern wie C₁₋₆-Alkyl-Estern der Acrylsäure und/oder der Methacrylsäure. Der Polymeraufbau erfolgt über die Umsetzung der C-C-Doppelbindungen dieser Monomere. Die Herstellung solcher Poly(meth)acrylatbasierter Harze kann durch eine radikalische Polymerisation erfolgen, die beispielsweise durch die Zersetzung organischer Peroxide initiiert wird.

Umfasst das Bindemittel (A) wenigstens ein Poly(meth)acrylat-basiertes polymeres Harz als polymeres Harz (A1), so eignen sich insbesondere solche Poly(meth)acrylat-basierten polymeren Harze, welche durch mehrstufige radikalische Emulsionspolymerisation von olefinisch ungesättigten Monomeren in Wasser hergestellt werden können. Besonders bevorzugt sind Poly(meth)acrylat-basierte polymere Harze, welche durch
i. Polymerisation einer Mischung von olefinisch ungesättigten Monomeren A durch Emulsionspolymerisation in Wasser unter Verwendung eines Emulgators und eines wasserlöslichen Initiators,
ii. Polymerisation einer Mischung von olefinisch ungesättigten Monomeren B durch Emulsionspolymerisation in Wasser unter Verwendung eines Emulgators und eines wasserlöslichen Initiators in Gegenwart des unter i. erhaltenen Polymerisats, wobei diese Mischung von olefinisch ungesättigten Monomeren B vorzugsweise mindestens ein mehrfach olefinisch ungesättigtes Monomer enthält,
iii. Polymerisation einer Mischung von olefinisch ungesättigten Monomeren C durch Emulsionspolymerisation in Wasser unter Verwendung eines Emulgators und eines wasserlöslichen Initiators in Gegenwart des unter ii. erhaltenen Polymerisats,
herstellbar sind. Geeignete olefinisch ungesättigte Monomere können einfach oder mehrfach olefinisch ungesättigt sein. Beispiele geeigneter einfach olefinisch ungesättigter Monomere sind insbesondere (Meth)acrylat-basierte einfach olefinisch ungesättigte Monomere wie beispielsweise (Meth)acrylsäure und Ester, Nitrile, oder Amide der (Meth)acrylsäure. Beispiele geeigneter mehrfach olefinisch ungesättigter Monomere sind Ester der (Meth)acrylsäure mit einem olefinisch ungesättigten Rest. Bei diesem Rest kann es sich um einen Allylrest handeln oder um einen (Meth)acrylsäureest. Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat. Vorzugsweise enthält die Monomermischung A wenigstens mindestens einen einfach ungesättigten Ester der (Meth)acrylsäure mit einem unsubstituierten Alkylrest und gegebenenfalls zudem mindestens ein vinylisch, einfach ungesättigtes Monomer mit einem aromatischen Rest an der Vinylgruppe. Vorzugsweise enthält die Monomermischung B mindestens ein mehrfach olefinisch ungesättigtes Monomer, mindestens einen einfach ungesättigten Ester der (Meth)acrylsäure mit einem unsubstituierten Alkylrest, und gegebenenfalls mindestens ein vinylisch, einfach ungesättigtes Monomer mit einem aromatischen Rest an der Vinylgruppe. Vorzugsweise enthält die Monomermischung C mindestens eine alpha-beta ungesättigte Carbonsäure, mindestens einen einfach ungesättigten Ester der (Meth)acrylsäure mit einem mit einer oder mehreren Hydroxylgruppen substituierten Alkylrest, mindestens einen einfach ungesättigten Ester der (Meth)acrylsäure mit einem unsubstituierten Alkylrest, und gegebenenfalls mindestens ein vinylisch, einfach ungesättigtes Monomer mit einem aromatischen Rest an der Vinylgruppe.

Umfasst das Bindemittel (A) neben wenigstens einem polymeren Harz (A1) zudem wenigstens ein Vernetzungsmittel (A2), so eignen sich hierfür alle dem Fachmann bekannten üblichen Vernetzungsmittel wie beispielsweise Aminoplaste, Phenoplaste, polyfunktionelle Mannich-Basen, Melaminharze, Benzoguanamin-Harze, beta-Hydroxyalkylamide, Tris(alkoxycarbonylamino)triazine, Epoxide, freie Polyisocyanate und/oder blockierte Polyisocyanate, insbesondere blockierte Polyisocyanate, sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Ein besonders bevorzugtes Vernetzungsmittel ist ein blockiertes Polyisocyanat. Werden blockierte Polyisocyanate als Vernetzungsmittel gewählt, wird die erfindungsgemäße wässrige Beschichtungszusammensetzung vorzugsweise als 1-Komponenten-Zusammensetzung (1-K) formuliert. Werden unblockierte Polyisocyanate als Vernetzungsmittel gewählt, wird die erfindungsgemäße wässrige Beschichtungszusammensetzung vorzugsweise als 2-Komponenten-Zusammensetzung (2-K) formuliert.

Besonders bevorzugt als Vernetzungsmittel (A2) einsetzbar sind in Wasser lösbare oder dispergierbare Melamin-Harze, vorzugsweise Melamin-Formaldehyd-Kondensationsprodukte, insbesondere veretherte Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten (methylierten) Melaminharze. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethylcyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Tetamethylxylylendiisocyanat (TMXDI), 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Als blockierte Polyisocyanate können beliebige Isocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°C, aber reagiert. Für die Blockierung der Isocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Die erfindungsgemäße wässrige Beschichtungszusammensetzung enthält vorzugsweise als Vernetzungsmittel (A2) wenigstens ein gegebenenfalls alkyliertes Melamin-Formaldehyd-Kondensationsprodukt, vorzugsweise wenigstens ein in Wasser lösbares oder dispergierbares Melamin-Formaldehyd-Kondensationsprodukt, insbesondere wenigstens ein in Wasser lösbares oder dispergierbares verethertes (alkyliertes), vorzugsweise methyliertes Melamin-Formaldehyd-Kondensationsprodukt. Solche Produkte sind kommerziell erhältlich, beispielsweise unter der Bezeichnung Resimene® HM 2608.

Vorzugsweise ist das Vernetzungsmittel (A2) ein in Wasser gelöstes oder dispergiertes Vernetzungsmittel. Zur Beschleunigung der Vernetzung können der wässrigen Beschichtungszusammensetzung geeignete Katalysatoren zugesetzt werden. Auch solche Katalysatoren sind dem Fachmann bekannt.

Die erfindungsgemäße wässrige Beschichtungszusammensetzung enthält das polymere Harz (A1) vorzugsweise in einer Menge in einem Bereich von 5 bis 40 Gew.-% oder von 20 bis 40 Gew.-%, besonders bevorzugt von 5 bis 35 Gew.-% oder von 20 bis 35 Gew.-%, ganz besonders bevorzugt von 5 bis 30 Gew.-% oder von 20 bis 30 Gew.-% auf, jeweils bezogen auf das Gesamtgewicht der wässrigen Beschichtungszusammensetzung.

Vorzugsweise enthält die erfindungsgemäße wässrige Beschichtungszusammensetzung das Vernetzungsmittel (A2) in einer Menge von 5 bis 40 Gew.-%, vorzugsweise in einer Menge von 10 bis 35 Gew.-%, besonders bevorzugt in einer Menge von 15 bis 30 Gew.-%, bezogen auf das Gesamtgewicht der polymeren Harze (A1) in der Beschichtungszusammensetzung. Die Mengenangaben sind dabei jeweils auf den jeweiligen Festkörpergehalt bezogen.

Vorzugsweise enthält die wässrige Beschichtungszusammensetzung das Vernetzungsmittel (A2) in einer Menge von 0,1 bis 20 Gew.-%, vorzugsweise in einer Menge von 0,5 bis 15 Gew.-%, besonders bevorzugt in einer Menge von 1 bis 10 Gew.-%, jeweils bezogen auf das Gesamtgewicht der wässrigen Beschichtungszusammensetzung.

### Pigment (B)

Die erfindungsgemäße Beschichtungszusammensetzung enthält wenigstens ein Pigment (B).

Vorzugsweise liegt das Pigment (B) als ein in Wasser gelöstes oder dispergiertes Pigment (B) vor.

Als Pigment (B) eignen sich insbesondere organische und/oder anorganische, farbgebende und/oder füllende Pigmente und insbesondere solche Pigmente, die vorzugsweise mindestens zwei dieser Eigenschaften aufweisen.

In einer bevorzugten Ausführungsform ist das Pigment (B) ein Effektpigment oder eine Mischung aus wenigstens einem Effektpigment und wenigstens einem davon unterschiedlichen Pigment, welches selbst kein Effektpigment ist und welches vorzugsweise aus der Gruppe bestehend aus organischen und anorganischen, farbgebenden und füllenden Pigmenten, sowie Pigmenten, die vorzugsweise mindestens zwei dieser Eigenschaften aufweisen, ausgewählt ist.

Ein Fachmann ist mit dem Begriff der Effektpigmente vertraut. Eine entsprechende Definition findet sich beispielsweise im Römpp Lexikon Lacke und Druckfarben, Georg Thieme Verlag, 1998. Vorzugsweise handelt es sich bei Effektpigmenten um solche Pigmente, die optisch effektgebend oder farb- und optisch effektgebend, insbesondere optisch effektgebend sind. Eine entsprechende Einteilung der Pigmente erfolgt nach DIN 55945 (Datum: Dezember 2011).

Vorzugsweise ist das Pigment (B) ausgewählt aus der Gruppe bestehend aus gegebenenfalls beschichteten organischen und anorganischen Effektpigmenten.

Besonders bevorzugt ist das Pigment (B) ausgewählt aus der Gruppe bestehend aus gegebenenfalls beschichteten Metalleffektpigmenten, gegebenenfalls beschichteten Metalloxideffektpigmenten, gegebenenfalls beschichtete Effektpigmente, die aus Metallen und Nichtmetallen zusammengesetzt sind, und gegebenenfalls beschichteten nichtmetallischen Effektpigmenten.

Ganz besonders bevorzugt ist das Pigment (B) ausgewählt aus der Gruppe bestehend aus Metalleffektpigmenten, silikatbeschichteten Metalleffektpigmenten, und gegebenenfalls beschichteten nichtmetallischen Effektpigmenten wie Perlglanzpigmenten, insbesondere Mica-Pigmenten. Insbesondere bevorzugt ist das Pigment (B) ausgewählt aus der Gruppe bestehend aus Metalleffektpigmenten und silikatbeschichteten Metalleffektpigmenten.

Bevorzugte Metalleffektpigmente sind beispielsweise Aluminiumeffektpigmente, Eiseneffektpigmente oder Kupfereffektpigmente. Ganz besonders bevorzugt sind gegebenenfalls beschichtete - wie beispielsweise silanisierte und/oder chromatierte - Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan.

Die erfindungsgemäß eingesetzten Effektpigmente (B) können dabei in jeder üblichen dem Fachmann bekannten Form wie z.B. einer Blättchen- und/oder einer Plättchenform, insbesondere einer (Corn)flake- oder einer Silverdollar-Form vorliegen.

Beispiele für aus Metallen und Nichtmetallen zusammengesetzten Effektpigmente sind mit Eisenoxid beschichtete Aluminiumpigmente, wie sie beispielsweise in der europäischen Patentanmeldung EP 0 562 329 A2 beschrieben werden, Glasblättchen, die mit Metallen, insbesondere Aluminium, beschichtet sind, oder Interferenzpigmente, die eine Reflektorschicht aus Metall, insbesondere Aluminium, enthalten.

Beispiele für nichtmetallische Effektpigmente sind Perlglanzpigmente, insbesondere Micapigmente, mit Metalloxiden beschichtete, beispielsweise plättchenförmige Graphitpigmente, Interferenzpigmente, die keine Reflektorschicht aus Metall enthalten und einen starken Farbflop aufweisen; Effektpigmente auf der Basis von Eisenoxid; oder organische, flüssigkristalline Effektpigmente.

Ergänzend wird hinsichtlich der als Pigment (B) erfindungsgemäß vorzugsweise eingesetzten Effektpigmente auf das Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Als Pigment (B) geeignete Pigmente, welche keine Effektpigmente sind, sind vorzugsweise aus der Gruppe bestehend aus organischen und anorganischen, farbgebenden und füllenden Pigmenten, Pigmenten, die vorzugsweise mindestens zwei dieser Eigenschaften aufweisen, und Nanopartikeln ausgewählt.. Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen. Vorzugsweise werden die Nanopartikel aus der Gruppe bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt. Vorzugsweise handelt es sich bei den Verbindungen der Metalle um die Oxide, Oxidhydrate, Sulfate oder Phosphate. Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet. Vorzugsweise weisen diese Nanopartikel eine mittlere Primärpartikelgröße < 50 nm, bevorzugt 5 bis 50 nm, insbesondere 10 bis 30 nm, auf. Die Primärpartikelgröße wird dabei vorzugsweise mittels Laserbeugung bestimmt, besonders bevorzugt mittels Lasergranulometrie gemäß ISO 13320-1 (Datum: September 2009).

Der Gehalt des erfindungsgemäß eingesetzten Pigments (B) in der erfindungsgemäßen Beschichtungszusammensetzung kann je nach Verwendungszweck der betreffenden pigmentierten Beschichtungszusammensetzung sehr breit variieren. Vorzugsweise liegt der Gehalt an Pigment (B), bezogen auf die erfindungsgemäße Beschichtungszusammensetzung bei 0,1 bis 25 Gew.-%, bevorzugt bei 1,0 bis 20 Gew.-%, besonders bevorzugt bei 1,5 bis 18 Gew.-%, ganz besonders bevorzugt bei 2 bis 15 Gew.-% und insbesondere bei 2,0 bis 8 Gew.-%.

### Dispersion (P) als Bestandteil der erfindungsgemäßen Beschichtungszusammensetzung

Alle im Zusammenhang mit der erfindungsgemäßen wässrigen Dispersion (P) hierin zuvor beschriebene bevorzugte Ausführungsformen sind auch bevorzugte Ausführungsformen hinsichtlich der erfindungsgemäßen Beschichtungszusammensetzung umfassend die erfindungsgemäße wässrige Dispersion (P), insbesondere im Zusammenhang mit den polymeren Harzen (P1) und (P2).

Vorzugsweise ist die erfindungsgemäße Beschichtungszusammensetzung erhältlich durch die in dieser Reihenfolge aufeinanderfolgenden Schritte (1) und (2), nämlich
(1) Herstellen der erfindungsgemäßen wässrigen Dispersion (P), und
(2) Vermischen der nach Schritt (1) erhaltenen wässrigen Dispersion (P) mit den weiteren zur Herstellung der Beschichtungszusammensetzung eingesetzten Komponenten, d.h. wenigstens mit den Komponenten (A1) und (B) sowie gegebenenfalls (A2), (D), (E), weiterem Wasser und/oder organischer Lösemittel.

Die wässrige Dispersion (P) wird somit vorzugsweise vorab durch Dispergieren des polymeren Harzes (P1) in Wasser oder einem wässrigen Medium in Gegenwart des polymeren Harzes (P2) hergestellt. Diese so hergestellte wässrige Dispersion (P) wird als eine Komponente zur Herstellung der erfindungsgemäßen Beschichtungszusammensetzung eingesetzt. Die wässrige Dispersion (P) kann wie vorstehend ausgeführt zudem optional wenigstens eine Komponente (C) aufweisen.

Vorzugsweise sind das wenigstens eine polymeren Harz (P1) und das wenigstens eine davon verschiedene polymere Harz (P2) in der erfindungsgemäßen Beschichtungszusammensetzung zusammen in einer Menge in einem Bereich von 0,5 bis 15 Gew.-%, besonders bevorzugt von 0,75 bis 10 Gew.-%, ganz besonders bevorzugt von 1,0 bis 8,5 Gew.-%, insbesondere bevorzugt von 1,5 bis 7,5 Gew.-%, am meisten bevorzugt von 1,0 bis 5,0 Gew.-% jeweils bezogen auf das Gesamtgewicht der Beschichtungszusammensetzung, vorhanden.

Die erfindungsgemäße Beschichtungszusammensetzung enthält das innerhalb der Dispersion (P) als polymeres Harz (P1) eingesetzte Polyamid vorzugsweise in einer Menge in einem Bereich von 0,05 bis 5 Gew.-%, besonders bevorzugt in einer Menge in einem Bereich von 0,1 bis 4,5 Gew.-%, ganz besonders bevorzugt in einer Menge in einem Bereich von 0,15 bis 4 Gew.-%, noch bevorzugter in einer Menge in einem Bereich von 0,2 bis 3,5 Gew.-%, insbesondere in einer Menge in einem Bereich von 0,25 bis 3 Gew.-%, jeweils bezogen auf das Gesamtgewicht der Beschichtungszusammensetzung. Die Menge des Polyamids in Gew.-% in der erfindungsgemäßen Basislackzusammensetzung bezieht sich dabei jeweils auf das Polyamid per se, d.h. auf dessen Festkörper.

Die erfindungsgemäße Beschichtungszusammensetzung enthält den innerhalb der Dispersion (P) als polymeres Harz (P2) eingesetzten Polyester vorzugsweise in einer Menge in einem Bereich von 0,4 bis 10 Gew.-%, besonders bevorzugt in einer Menge in einem Bereich von 0,6 bis 9 Gew.-%, ganz besonders bevorzugt in einer Menge in einem Bereich von 0,8 bis 8 Gew.-%, noch bevorzugter in einer Menge in einem Bereich von 1 bis 6 Gew.-%, insbesondere in einer Menge in einem Bereich von 1,5 bis 5 Gew.-%, jeweils bezogen auf das Gesamtgewicht der Beschichtungszusammensetzung. Die Menge des Polyesters in Gew.-% in der erfindungsgemäßen Basislackzusammensetzung bezieht sich dabei jeweils auf den Polyester per se, d.h. auf dessen Festkörper.

### Optionale Komponente (D) der erfindungsgemäßen Beschichtungszusammensetzung

Die erfindungsgemäße Beschichtungszusammensetzung kann gegebenenfalls wenigstens eine weitere Komponente (D) enthalten. Als Komponente (D) eignet sich vorzugsweise ein Verdickungsmittel, vorzugsweise ein solches Verdickungsmittel, welches vom polymeren Harz (P1) verschieden ist. Zudem ist die optionale Komponente (D) auch vom polymeren Harz (P2) verschieden. Es können auch zwei oder mehr voneinander verschiedene Komponenten (D) eingesetzt werden. Vorzugsweise ist die optionale Komponente (D) ausgewählt aus der Gruppe bestehend aus Metallsilikaten, Verdickungsmitteln auf Basis von Poly(meth)acrylsäure, Verdickungsmitteln auf Basis von Polyurethanen, polymeren Wachsen und Mischungen davon.

Das Metallsilikat wird bevorzugt aus der Gruppe der Smektite ausgewählt. Besonders bevorzugt werden die Smektite aus der Gruppe der Montmorillonite und Hectorite ausgewählt. Insbesondere werden die Montmorillonite und Hectorite aus der Gruppe bestehend aus Aluminium-Magnesium-Silikaten sowie Natrium-Magnesium- und Natrium-Magnesium-Fluor-Lithium-Schichtsilikaten, ausgewählt. Diese anorganischen Schichtsilikate werden unter der Marke Laponite® vertrieben.

Verdickungsmittel auf Basis von Poly(meth)acrylsäure sind gegebenenfalls vernetzt und/oder mit einer geeigneten Base neutralisiert. Beispiele solcher Verdickungsmittel auf Basis von Poly(meth)acrylsäure sind "Alkali Swellable Emulsions" (ASE), und hydrophob modifizierte Varianten davon, die "Hydrophically modified Alkali Swellable Emulsions (HASE). Vorzugsweise sind Verdickungsmittel auf Basis von Poly(meth)acrylsäure anionisch. Entsprechende Produkte wie Rheovis® AS 1130 sind kommerziell erhältlich.

Verdickungsmittel auf Basis von Polyurethanen (z.B. Polyurethan-Assoziativ-Verdickungsmittel) sind gegebenenfalls vernetzt und/oder mit einer geeigneten Base neutralisiert. Entsprechende Produkte wie Rheovis® PU 1250 sind kommerziell erhältlich.

Als polymere Wachse eignen sich beispielsweise gegebenenfalls modifizierte polymere Wachse auf Basis von Ethylen-Vinylacetat-Copolymeren. Entsprechende Produkte sind zum Beispiel unter der Bezeichnung Aquatix® kommerziell erhältlich.

Enthält die erfindungsgemäße Beschichtungszusammensetzung wenigstens eine Komponente (D), so liegt das relative Gewichtsverhältnis des polymeren Harzes (P1) in der erfindungsgemäßen Beschichtungszusammensetzung zu der weiteren Komponente (D) vorzugsweise in einem Bereich von 15:1 bis 1:15, besonders bevorzugt in einem Bereich von 5:1 bis 1:5, ganz besonders bevorzugt in einem Bereich von 5:1 bis 1,5:1. Alle Angaben beziehen sich auf den Festkörper der Komponenten.

Ist die Komponente (D) ein Metallsilikat, so liegt das relative Gewichtsverhältnis des polymeren Harzes (P1) in der erfindungsgemäßen Beschichtungszusammensetzung zu der Komponente (D) vorzugsweise in einem Bereich von 7,5:1 bis 1,2:1, besonders bevorzugt in einem Bereich von 5:1 bis 1,5:1. Ist die Komponente (D) ein Verdickungsmittel auf Basis von Poly(meth)acrylsäure, so liegt das relative Gewichtsverhältnis des polymeren Harzes (P1) in der erfindungsgemäßen Beschichtungszusammensetzung zu der Komponente (D) vorzugsweise in einem Bereich von 5:1 bis 1,5:1, besonders bevorzugt in einem Bereich von 4:1 bis 2:1. Ist die Komponente (D) ein Verdickungsmittel auf Basis von Polyurethanen, so liegt das relative Gewichtsverhältnis des polymeren Harzes (P1) in der erfindungsgemäßen Beschichtungszusammensetzung zu der Komponente (D) vorzugsweise in einem Bereich von 4:1 bis 1,2:1, besonders bevorzugt in einem Bereich von 3:1 bis 1,5:1. Alle Angaben beziehen sich auf den Festkörper der Komponenten.

Vorzugsweise liegt die wenigstens eine Komponente (D) in der erfindungsgemäßen Beschichtungszusammensetzung in einer Menge von höchstens 5 Gew.-%, besonders bevorzugt von höchstens 2,5 Gew.-%, ganz besonders bevorzugt von höchstens 1,5 Gew.-%, insbesondere von höchstens 1,0 Gew.-%, am meisten bevorzugt von höchstens 0,75 Gew.-%, jeweils bezogen auf das Gesamtgewicht der Beschichtungszusammensetzung, vor.

### Optionale Komponente (E)

Die erfindungsgemäße Beschichtungszusammensetzung kann je nach erwünschter Anwendung ein oder mehrere üblicherweise eingesetzte Additive als Komponente (E) enthalten. Vorzugsweise sind diese Additive (E) ausgewählt aus der Gruppe bestehend aus Antioxidantien, Antistatika, Netz- und Dispergiermitteln, Verlaufshilfsmitteln, Löslichkeitsvermittlern, Entschäumungsmitteln, Benetzungsmitteln, Stabilisierungsmitteln, vorzugsweise Hitze- und/oder WärmeStabilisatoren, Prozess-Stabilisatoren und UV- und/oder Licht-Stabilisatoren, Lichtschutzmitteln, Entlüftern, Inhibitoren, Katalysatoren, Flexibilisierungsmitteln, Flammschutzmitteln, Reaktivverdünnern, Trägermedien, Hydrophobierungsmitteln, Hydrophilierungsmitteln, Schlagzähmachern, Blähmitteln, Prozesshilfsmitteln, Weichmachern, und Gemischen aus den vorstehend genannten weiteren Additiven. Der Additiv-Gehalt an Additiv (E) in der erfindungsgemäßen Beschichtungszusammensetzung kann variieren. Vorzugsweise liegt der Gehalt, bezogen auf das Gesamtgewicht der erfindungsgemäßen Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

Die erfindungsgemäße Beschichtungszusammensetzung kann dadurch hergestellt werden, dass die jeweiligen Komponenten, die vorstehend beschrieben worden sind, in einem Medium auf Wasserbasis beispielsweise mittels Schnellrührer, Rührkessel, Rührwerksmühlen, Dissolver, Kneter, oder In-Line-Dissolver gemischt und dispergiert und/oder gelöst werden, gegebenenfalls unter zusätzlicher Wasserzugabe.

### Verwendung

Ein weiterer Gegenstand der vorliegenden Erfindung ist eine Verwendung der erfindungsgemäßen Beschichtungszusammensetzung zur zumindest teilweisen Beschichtung eines gegebenenfalls beschichteten Substrats mit einer Basislackschicht.

Als Substrat eignen sich beispielsweise zu beschichtende Gegenstände aus Metall oder Kunststoff wie daraus hergestellte Karosserien und deren Teile von Automobilen wie Personenkraftwagen, Lastwagen, Motorrädern und Autobussen, und aus Metall oder Kunststoff hergestellte Teile von elektrischen Haushaltsprodukten.

### Verfahren, Basislackschicht und Substrat

Ein weiterer Gegenstand der vorliegenden Erfindung ist ein Verfahren zur zumindest teilweisen Beschichtung eines gegebenenfalls beschichteten Substrats mit einer Basislackschicht umfassend wenigstens einen Schritt (a):
(a) zumindest teilweise Beschichtung wenigstens eines gegebenenfalls beschichteten Substrats mit einer Basislackschicht mit der erfindungsgemäßen wässrigen Beschichtungszusammensetzung.

Schritt (a) erfolgt dabei durch zumindest teilweises Kontaktieren des Substrats mit der erfindungsgemäßen Beschichtungszusammensetzung.

Gegebenenfalls kann auf Schritt (a) ein weiterer Schritt (b) folgen, nämlich das Aufbringen einer weiteren Schicht, vorzugsweise einer Klarlackschicht, auf die nach Schritt (a) aufgebrachte Basislackschicht. In diesem Fall ist das erfindungsgemäße Verfahren ein Verfahren zum Erhalt einer Mehrschichtlackierung.

Ein weiterer Gegenstand der vorliegenden Erfindung ist eine Basislackschicht, welche erhältlich ist durch zumindest teilweise Beschichtung wenigstens eines gegebenenfalls beschichteten Substrats mit der erfindungsgemäßen wässrigen Beschichtungszusammensetzung oder welche erhältlich ist durch das erfindungsgemäße Verfahren.

Ein weiterer Gegenstand der vorliegenden Erfindung ist ein zumindest teilweise mit der erfindungsgemäßen wässrigen Beschichtungszusammensetzung oder mit der erfindungsgemäßen Basislackschicht beschichtetes Substrat.

Die erfindungsgemäße Beschichtungszusammensetzung kann dabei direkt oder nach dem vorangegangenen zumindest teilweisen Auftragen einer Grundbeschichtungszusammensetzung (Grundierung) und erforderlichenfalls nach dem zumindest teilweisen Auftrag einer weiteren Beschichtungszusammensetzung wie einer Füllerschicht auf die Grundierung auf die zu beschichtenden Gegenstände aufgebracht werden. Anschließend erfolgt vorzugsweise ein Härten dieser Beschichtungsfilme. Vorzugsweise wird die erfindungsgemäße Beschichtungszusammensetzung als Lackierung auf Automobilkarosserien und deren Teile aufgebracht. Die zu beschichtenden metallischen Gegenstände werden zuvor bevorzugt einer chemischen Behandlung mit Phosphaten und Chromaten, vorzugsweise Phosphaten wie Metallphosphaten, insbesondere Zinkphosphaten, unterworfen.

Die erfindungsgemäße Beschichtungszusammensetzung kann auf diese zu beschichtenden Substrate durch ein elektrostatisches Beschichten, durch ein Luftspraybeschichten und durch luftloses Spraybeschichten beschichtet werden. Die Dicke des dadurch erhaltenen Überzugsfilms davon fällt vorzugsweise in einen Bereich von 5 bis 35 µm, insbesondere 10 bis 25 µm, als gehärteter Überzugsfilm. Der Überzugsfilm kann beispielsweise dadurch getrocknet werden, dass er 2 bis 40 Minuten, vorzugsweise 5 bis 20 Minuten, lang auf 50 bis etwa 100°C (Ofentemperatur) erhitzt wird.

Eine klare Beschichtungszusammensetzung kann auf den Überzugsfilm aus der erfindungsgemäßen Beschichtungszusammensetzung nach dessen Härtung oder ohne dessen Härtung, d.h. auf eine beschichtete Seite davon, beschichtet werden.

Die klare Beschichtungszusammensetzung zum Auftrag eines solchen Klarlacks kann dadurch aufgeschichtet werden, dass zuerst die erfindungsgemäße Beschichtungszusammensetzung auf das zu beschichtende Substrat in der vorstehend beschriebenen Art und Weise aufgeschichtet wird und dass man die klare Beschichtungszusammensetzung mit einem auf vorzugsweise 30 bis 80 Gew.-% kontrollierten Feststoffgehalt in der Beschichtungszusammensetzung auf eine beschichtete Oberfläche davon durch ein elektrostatisches Beschichten, ein Luftsprühbeschichten und ein luftloses Sprühbeschichten nach dem Härten eines Überzugsfilms davon durch Erhitzen oder im nicht-gehärteten Zustand aufgeschichtet wird. Die Filmdicke der klaren Beschichtungszusammensetzung fällt vorzugsweise in einen Bereich von gewöhnlich 5 bis 100 µm, insbesondere 20 bis 80 µm, bezogen auf den gehärteten Überzugsfilm. Der gesamte Überzugsfilm kann dadurch gehärtet werden, dass er 10 bis 40 Minuten lang auf 100 bis 180°C erhitzt wird.

### Bestimmungsmethoden

### 1. Beurteilung des Auftretens von Stippen bei Applikation der erfindungsgemäßen wässrigen Dispersionen oder Vergleichsdispersionen auf ein Substrat

Zur Beurteilung des Auftretens von Stippen werden die Dispersionen gemäß der folgenden allgemeinen Vorschrift untersucht:
Die jeweilige Dispersion wird mittels einer 150 µm Kastenrakel auf eine Glastafel der Abmessungen 9 cm x 15 cm appliziert. Im nassen Zustand wird der so gebildete Film nach einer 60-minütigen Ablüftzeit bei 18 bis 23°C visuell hinsichtlich des Auftretens von Stippen beurteilt, indem er gegen eine Lichtquelle gehalten wird, um eventuelle Lufteinschlüsse nicht als Stippen fehlzuinterpretieren. Es wird eine Note von 1-5 vergeben (1 = keine Stippen / 5 = sehr viele Stippen).

### 2. Beurteilung der Homogenität und Wassermischbarkeit

Zur Beurteilung der Homogenität und Wassermischbarkeit werden die erfindungsgemäßen wässrigen Dispersionen (oder Vergleichsdispersionen) gemäß der folgenden allgemeinen Vorschrift untersucht:
*a) Homogenität*: Es wird beurteilt, ob sich die einzelnen zur Herstellung der Dispersion eingesetzten Komponenten zu einer makroskopisch einphasigen Mischung (homogene Mischung) vermengen lassen oder ob sich beispielsweise bereits beim Einwiegen oder innerhalb von 5 bis 10 Minuten nach Zusammenrühren der Komponenten aufgrund einer Entmischung zwei oder mehrere Phasen ausbilden.
*b) Wassermischbarkeit*: Es wird beurteilt, inwiefern sich deionisiertes Wasser als letzte zur Herstellung der Dispersion eingesetzte Komponente mit den übrigen Bestandteilen der Dispersion mischen lässt. Ein Maß hierfür ist insbesondere die Menge an Scherenergie, die beim Mischen benötigt wird.

Es werden jeweils Noten von 1-5 vergeben (1 = sehr homogen / 5 = sehr inhomogen bzw. 1 = sehr gut wassermischbar / 5 = nicht wassermischbar).

### 3. Beurteilung der Lagerstabilität der erfindungsgemäßen wässrigen Dispersionen oder Vergleichsdispersionen

Zur Beurteilung der Lagerstabilität werden die erfindungsgemäßen wässrigen Dispersionen (oder Vergleichsdispersionen) gemäß der folgenden allgemeinen Vorschrift visuell untersucht:
Dabei wird die jeweilige Dispersion in einem verschlossenen Glasgefäß bei 18-23°C oder bei 40 °C über einen Zeitraum von 28 oder von 365 Tagen gelagert. Anschließend wird visuell überprüft, ob eine Entmischung stattgefunden hat. Es wird eine Note von 1-5 vergeben (1 = sehr stabil, d.h. keine Entmischung bzw. keine Ausbildung mehrerer Phasen / 5 = sehr instabil, d.h. starke Entmischung bzw. sehr deutliche Ausbildung mehrerer Phasen).

### 4. Beurteilung des Auftretens von Nadelstichen

Zur Beurteilung des Auftretens von Nadelstichen wird eine erfindungsgemäße Beschichtungszusammensetzung enthaltend die erfindungsgemäße wässrige Dispersion (oder eine Vergleichsbeschichtungszusammensetzung) als Wasserbasislack auf ein mit einer Füllerlackierung beschichtetes Stahlblech der Abmessungen 32 x 60 cm mittels Einfachauftrag appliziert. Zuvor wird das Stahlblech an einer Längskante mit zwei Klebstreifen (Tesaband, 19 mm) versehen, um nach der Beschichtung Schichtdickendifferenzen ermitteln zu können. Der Wasserbasislack wird dann elektrostatisch mit einer Trockenschichtdicke von 16-19 µm appliziert. Die resultierende Wasserbasislackschicht wird anschließend nach einer Ablüftzeit bei Raumtemperatur (18 bis 23°C) von 5 Minuten im Umluftofen für 10 Minuten bei 80 °C getrocknet. Nach Entfernen eines der beiden Klebestreifen wird auf die getrocknete Wasserbasislackschicht per Fließbecherpistole manuell ein handelsüblicher Zweikomponenten-Klarlack (Evergloss® der BASF Coatings GmbH) keilförmig mit einer Trockenschichtdicke von 0-55 µm appliziert. Die resultierende Klarlackschicht wird während 10 Minuten bei Raumtemperatur (18 bis 23°C) abgelüftet; anschließend erfolgt die Härtung im Umluftofen bei 140 °C für weitere 20 Minuten. Nach Entfernung des zweiten Klebestreifens wird die Trockenschichtdicke des Wasserbasislackes kontrolliert sowie für den Klarlackkeil die Schichtdickenbereiche 20-30 µm, 30-40 µm sowie 40-50 µm auf dem Stahlblech markiert. Die jeweiligen Schichtdicken werden dabei nach DIN EN ISO 2808 (Datum: Mai 2007), Verfahren 12A (z.B. mit dem Messgerät MiniTest 3100 - 4100 der Firma ElektroPhysik) bestimmt.

Die Auswertung der Nadelstiche erfolgt visuell in den drei getrennten Klarlack-Trockenschichtdickenbereichen (20-30 µm, 30-40 µm und 40-50 µm). Je Bereich wird die Anzahl der Nadelstiche ausgezählt. Alle Ergebnisse werden auf eine Fläche von 200 cm² normiert. Zusätzlich wird gegebenenfalls protokolliert, ab welcher Trockenschichtdicke der Klarlackschicht keine Nadelstiche mehr auftreten.

### 5. Bestimmung der Lagerstabilität von Beschichtungszusammensetzungen oder Vergleichsbeschichtungszusammensetzungen

Zur Bestimmung der Lagerstabilität der erfindungsgemäßen Beschichtungszusammensetzungen enthaltend eine erfindungsgemäße wässrige Dispersion (oder von Vergleichsbeschichtungszusammensetzungen) werden diese vor und nach einer zweiwöchigen Lagerung bei 40 °C mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C ± 0,2 °C) untersucht. Dabei werden die Proben zunächst 3 Minuten bei einer Scherrate von 100 s⁻¹ vorgeschert. Anschließend erfolgt eine Temperierung ohne Scherbelastung. Zur Messung einer sogenannten Fließkurve wird innerhalb von ca. 5 Minuten ein Scherratenbereich von 0,1 s⁻¹ bis 1000 s⁻¹ abgefahren (Aufwärtskurve). Danach wird für eine Minute bei 1000 s⁻¹ geschert (Haltezeit), bevor abschließend wiederum innerhalb von ca. 5 Minuten ein Scherratenbereich von 1000 s⁻¹ bis 0,1 s⁻¹ abgefahren wird (Abwärtskurve). Während der Auf- und Abwärtskurve werden 36, während der Haltezeit 10 Messpunkte erfasst. Das mittlere Viskositätsniveau während der Haltezeit (Hochscherviskosität) sowie das Viskositätsniveau bei 1 s⁻¹ (Niederscherviskosität), ermittelt aus der Abwärtskurve, werden aus den Messdaten ermittelt und die Werte vor und nach Lagerung miteinander verglichen.

### 6. Beurteilung des Auftretens von Stippen bei Applikation der erfindungsgemäßen Beschichtungszusammensetzungen oder Vergleichsbeschichtungszusammensetzungen auf ein Substrat

Zur Beurteilung des Auftretens von Stippen wird eine erfindungsgemäße Beschichtungszusammensetzung enthaltend eine erfindungsgemäße wässrige Dispersion (oder eine Vergleichsbeschichtungszusammensetzung) als Wasserbasislack auf ein mit einer Füllerlackierung beschichtetes Stahlblech der Abmessungen 32 x 60 cm mittels Zweifachauftrag appliziert, wobei die Applikation im ersten Schritt elektrostatisch mit einer Trockenschichtdicke von 8-9 µm erfolgt und die Applikation im zweiten Schritt nach einer 2-minütigen Ablüftzeit bei Raumtemperatur (18 bis 23°C) pneumatisch mit einer Trockenschichtdicke von 4-5 µm erfolgt. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Trockenschichtdicke von 40-45 µm appliziert. Die resultierende Klarlackschicht wird während einer Dauer 10 Minuten bei Raumtemperatur (18 bis 23°C) abgelüftet. Anschließend erfolgt eine Härtung im Umluftofen bei 140 °C für weitere 20 Minuten.

Die Auswertung von Stippen erfolgt visuell, dabei wird eine Note von 1-5 vergeben (1 = keine Stippen / 5 = sehr viele Stippen).

### 7. Bestimmung des nicht-flüchtigen Anteils

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil. Das Volumen des nicht-flüchtigen Anteils kann falls erforderlich gegebenenfalls gemäß DIN 53219 (Datum: August 2009) bestimmt werden.

### 8. Bestimmung des zahlenmittleren und des gewichtsmittleren Molekulargewichts

Die Bestimmung des zahlenmittleren Molekulargewichts (Mₙ) erfolgt mittels Gel-Permeations-Chromatographie (GPC). Die Bestimmungsmethode ist dabei angelehnt an DIN 55672-1 (Datum: August 2007). Neben dem zahlenmittleren Molekulargewicht können mit dieser Methode zudem das gewichtsmittlere Molekulargewicht (M_{w}) sowie die Polydispersität (Verhältnis von gewichtsmittlerem Molekulargewicht (M_{w}) zu zahlenmittlerem Molekulargewicht (Mₙ)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### 9. Bestimmung der Hydroxyl-Zahl (OH-Zahl)

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

### 10. Bestimmung der Säure-Zahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, die zur Neutralisation von 1 g Probe unter den in der DIN EN ISO 2114 festgelegten Bedingungen erforderlich ist.

### 11. Bestimmung der Wolkigkeit

Unter der Wolkigkeit einer Lackierung versteht man nach DIN EN ISO 4618 (Datum: März 2007) das uneinheitliche Aussehen einer Lackierung, verursacht durch unregelmäßige, willkürlich auf der Oberfläche verteilte Bereiche, die sich in Farbe und/oder Glanz unterscheiden. Eine derartige, fleckenähnliche Inhomogenität stört den gleichmäßigen Gesamteindruck der Lackierung und ist in der Regel unerwünscht. Die unerwünschte Wolkigkeit der Lackierung kann beispielsweise durch die Eigenschaften der eingesetzten Beschichtungszusammensetzung bedingt sein.

Zur Bestimmung bzw. Beurteilung der Wolkigkeit werden Mehrschichtlackierungen nach der folgenden allgemeinen Vorschrift hergestellt:
Ein mit einer Standard-Füllerlackierung (SecuBloc® der Firma BASF Coatings GmbH) beschichtetes Stahlblech der Abmessungen 32 cm x 60 cm wird mit einer erfindungsgemäßen Beschichtungszusammensetzung oder einer Vergleichsbeschichtungszusammensetzung als Wasserbasislack mittels Zweifachauftrag appliziert: die Applikation im ersten Schritt erfolgt elektrostatisch mit einer Zielschichtdicke (Trockenschichtdicke) von 8-9 µm, im zweiten Schritt wird nach einer 2-minüten Ablüftzeit bei 18-23°C pneumatisch mit einer Zielschichtdicke von 4-5 µm (Trockenschichtdicke) appliziert. Die resultierende Wasserbasislackschicht wird anschließend nach erneuter Ablüftzeit bei 18-23°C über eine Dauer von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Zielschichtdicke (Trockenschichtdicke) von 40-45 µm appliziert. Die resultierende Klarlackschicht wird während 10 Minuten bei 18-23°C abgelüftet. Anschließend erfolgt eine Härtung im Umluftofen bei 140 °C für 20 Minuten.

Die Beurteilung der Wolkigkeit erfolgt visuell unter definierten Lichtverhältnissen und Beobachtungsgeometrien. Die Wolkigkeit wird dabei anhand einer Notenskala bewertet (Note 1 = keine Wolkigkeit erkennbar bis Note 5 = starke Wolkigkeit sichtbar). Dazu werden die entsprechenden Lackierungen unter diffusem Licht in zwei verschiedenen Winkeln aus einem Abstand von 2 bis 3 Metern betrachtet (a) Aufsicht: Betrachtungswinkel beträgt etwa 80° und (b) Schrägsicht: Betrachtungswinkel beträgt etwa 40°).

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

### 1. Eingesetzte Komponenten

Die nachfolgend genannten und zur Herstellung der erfindungsgemäßen Dispersionen und Beschichtungszusammensetzungen sowie entsprechender Vergleichsdispersionen oder Vergleichsbeschichtungszusammensetzungen eingesetzten Komponenten haben folgende Bedeutungen:
Disparlon® A6900-20X ist ein kommerziell erhältliches Polyamid der Firma Kusumoto Chemicals, Ltd (Nicht-flüchtiger Anteil: 20 Gew.-%).
Disparlon® A650-20X ist ein kommerziell erhältliches Polyamid der Firma Kusumoto Chemicals, Ltd (Nicht-flüchtiger Anteil: 20 Gew.-%).
Disparlon® A670-20M ist ein kommerziell erhältliches Polyamid der Firma Kusumoto Chemicals, Ltd. (Nicht-flüchtiger Anteil: 20 Gew.-%).
Disparlon® F-9030 ist ein kommerziell erhältliches Polyamid der Firma Kusumoto Chemicals, Ltd. (Nicht-flüchtiger Anteil: 20 Gew.-%).
Thixatrol® P220X-MF ist ein kommerziell erhältliches Polyamid der Firma Elementis Specialties, Inc. (Nicht-flüchtiger Anteil: 20 Gew.-%, Säure-Zahl: 5 mg KOH/g).
Luvotix® PA 20 XA ist ein kommerziell erhältliches Polyamid der Firma Lehmann & Voss & Co. (Nicht-flüchtiger Anteil: 20 Gew.-%, Säure-Zahl: ≤ 7 mg KOH/g).
Luvotix® AB ist ein kommerziell erhältliches Polyamid der Firma Lehmann & Voss & Co. (Nicht-flüchtiger Anteil: 100 Gew.-%; Säure-Zahl: ≤ 3 mg KOH/g).
Troythix® 250 XF ist ein kommerziell erhältliches Polyamid der Firma Troy Corp., USA (Nicht-flüchtiger Anteil: 20 Gew.-%; Säure-Zahl: 4-5 mg KOH/g).

Die erfindungsgemäß eingesetzte wässrige Dispersion eines Polyesters (I) wird hergestellt wie in Beispiel D der DE 40 09 858 A1 (Spalte 16, Zeilen 37-59) beschrieben, jedoch mit dem Unterschied, dass zum Anlösen anstelle von Butanol Butylglykol eingesetzt worden ist, und weist einen nicht-flüchtigen Anteil von 60 Gew.-% auf. Der Polyester weist eine Säure-Zahl von 30 mg KOH/g Polyester auf.

Polyester A (erfindungsgemäß eingesetzter Polyester) wird hergestellt, in dem in einen Reaktor, der mit einem Rührer, einem Thermometer und einer Füllkörperkolonne ausgestattet ist, 6,13 Gew.-Teile Neopentylglykol, 3,23 Gew.-Teile 1,6-Hexandiol, 7,78 Gew.-Teile Hexahydrophthalsäureanhydrid und 29,17 Gew.-Teile einer polymeren Fettsäure (Dimerengehalt mindestens 98 Gew.-%, Trimerengehalt höchstens 2 Gew.-%, Monomerengehalt höchstens Spuren) sowie 11,07 Gew.-Teile des kommerziell erhältlichen Produkts Bisphenol A 4EO, eingewogen und zum Schmelzen gebracht werden. Unter Rühren wird so aufgeheizt, dass die Kolonnenkopftemperatur 95°C nicht übersteigt. Es wird bei maximal 220° C so lange verestert, bis eine Säurezahl von 8,5 mg KOH/g erreicht ist. Nach Abkühlen auf 100°C werden 3,33 Gew.-Teile Trimellithsäureanhydrid zugegeben und weiter bei maximal 160°C verestert, bis eine Säurezahl von 30-35 mg KOH/g erreicht ist. Nach dem Abkühlen auf 90°C werden langsam 2,8 Gew.-Teile Dimethylethanolamin, 17,28 Gew.-Teile deionisiertes Wasser und 19,21 Gew.-Teile Butylglykol eingerührt. Man erhält eine feinteilige Dispersion mit einem pH-Wert von 7,3-8,5, einem nicht-flüchtigen Anteil von 60 Gew.-% und einer Säurezahl 35,3 mg KOH/g und einer OH-Zahl von 54 mg KOH/g. Diese Dispersion wird so als Polyester A eingesetzt.

Polyester B (erfindungsgemäß eingesetzter Polyester) wird hergestellt, in dem in einem Reaktor, der mit einem Rührer, einem Thermometer und einer Füllkörperkolonne ausgestattet ist, 6,87 Gew.-Teile Neopentylglykol, 7,23 Gew.-Teile 1,6-Hexandiol, 5,81 Gew.-Teile Hexahydrophthalsäureanhydrid und 32,66 Gew.-Teile einer polymeren Fettsäure (Dimerengehalt mindestens 98 Gew.-%, Trimerengehalt höchstens 2 Gew.-%, Monomerengehalt höchstens Spuren), 5,03 Gew.-Teile Dodecenylbernsteinsäureanhydrid, eingewogen und zum Schmelzen gebracht werden. Unter Rühren wird so aufgeheizt, dass die Kolonnenkopftemperatur 95°C nicht übersteigt. Es wird bei maximal 220° C so lange verestert, bis eine Säurezahl von 8,5 mg KOH/g erreicht ist. Nach Abkühlen auf 100°C werden 3,31 Gew.-Teile Trimellithsäureanhydrid zugegeben und weiter bei maximal 160°C verestert, bis eine Säurezahl von 30-35 mg KOH/g erreicht ist.. Nach dem Abkühlen auf 90°C werden langsam 2,78 Gew.-Teile Dimethylethanolamin, 17,19 Gew.-Teile deionisiertes Wasser und 19,12 Gew.-Teile Butylglykol eingerührt. Man erhält eine feinteilige Dispersion mit einem pH-Wert von 7,3-8,5, einem nicht-flüchtigen Anteil von 60 Gew.-% und einer Säurezahl 35,5 mg KOH/g und einer OH-Zahl von 56 mg KOH/g. Diese Dispersion wird so als Polyester B eingesetzt.

Polyester C (nicht-erfindungsgemäß eingesetzter Polyester) wird hergestellt, in dem Maleinsäureanhydrid (MSA, 2,48 mol), Adipinsäure (AD, 2,72 mol) und 1,6-Hexandiol (HD, 7,01 mol) in einen 4-Liter-Reaktor aus rostfreiem Stahl, ausgestattet mit einer Kolonne, einem Kühler sowie einem Wasserabscheider gegeben werden. Anschließend erfolgte die Zugabe von 3% Xylol als Schleppmittel und 0.1% Methylhydrochinon (die prozentualen Angaben beziehen sich auf die Menge des eingesetzten MSA, AD und HD). Das resultierende Reaktionsgemisch wurde innerhalb von 5 Stunden unter Magerluft aufgeheizt. Während der gesamten Reaktionszeit überschritt die Temperatur des Reaktionsgemischs 230 °C nicht. Nachdem eine Säurezahl von 2 mg KOH/g bezogen auf den Oligoester erreicht worden war, wurde das Reaktionsgemisch auf 80 °C abgekühlt. Anschließend wurde *in situ* Trimellithsäureanhydrid (TMSA, 0,95 mol) hinzugegeben. Danach wurde langsam bis 160°C aufgeheizt und diese Temperatur beibehalten, bis eine Säurezahl von 35 mg KOH/g bezogen auf den resultierenden Oligoester erreicht worden war. Nach erneutem Abkühlen auf 80 °C wurde Dimethylethanolamin (DMEA, 0,77 mol) über einen Zeitraum von 30 Minuten hinzugegeben. Anschließend erfolgte die Zugabe von Wasser um einen Festkörpergehalt von 25 Gew.-% einzustellen über einen Zeitraum von 30 Minuten. Die resultierende Dispersion wurde für eine weitere Stunde bei 80 °C gerührt und anschließend auf 18-23°C abgekühlt. Diese Dispersion wird so als Polyester C eingesetzt. Der in der Dispersion enthaltene alpha,omega-hydroxyfunktionalisierte Oligoester weist eine OH-Zahl von 58 mg KOH/g, eine Säurezahl von 35 mg KOH/g und ein zahlenmittleres Molekulargewicht von 3618 g/mol sowie ein gewichtsmittleres Molekulargewicht von 25400 g/mol auf.

Resimene® HM 2608 ist ein kommerziell erhältliches Melamin-Formaldehyd-Harz der Firma Ineos (Nicht-flüchtiger Anteil: 80-85 Gew.-%).
Lipotin® A ist ein kommerziell erhältliches Netz- und Dispergiermittel der Firma Evonik Industries AG.
Lutensol® ON 60 und Lutensol® XP 70 sind kommerziell erhältliche nicht-ionische Oberflächenadditive der Firma BASF SE.
Bei dem eingesetzten Sojalecithin handelt es sich um ein flüssiges kommerziell erhältliches Produkt der Firma Hanf & Nelles.
Alu Stapa Hydrolux® VP56450 ist ein handelsübliches Aluminiumpigment, erhältlich von der Firma Altana-Eckart.
Rheovis® AS 1130 ist eine kommerziell erhältliche wässrige Lösung der Firma BASF SE enthaltend 30 Gew.-% eines Verdickers basierend auf einem Acryl-Copolymer. Pluriol® E300 ist ein kommerziell erhältliches Polyethylenglykol der Firma BASF SE. Dispex® Ultra FA 4437 ist ein kommerziell erhältliches Verlaufshilfsmittel, erhältlich von der Firma BASF SE.
Disparlon® AQ600 ist ein kommerziell erhältliches Polyamid der Firma Kusumoto Chemicals, Ltd. (Nicht-flüchtiger Anteil: 20 Gew.-%).
Disparlon® AQ630 ist ein kommerziell erhältliches Polyamid der Firma Kusumoto Chemicals, Ltd. (Nicht-flüchtiger Anteil: 18 Gew.-%).
Die wässrige Dispersion wenigstens eines polymeren Harzes (I) wird hergestellt wie auf Seite 7, Zeile 55 bis Seite 8, Zeile 23 der DE 44 37 535 A1 beschrieben.

Bei der wässrigen Dispersion wenigstens eines polymeren Harzes (II) handelt es sich um eine Dispersion eines Poly(meth)acrylat-Harzes mit einem nicht-flüchtigen Anteil von 26-28 Gew.-%.

### 2. Herstellung von erfindungsgemäßen wässrigen Dispersionen von Verdickungsmitteln sowie von entsprechenden Vergleichsdispersionen (nicht-erfindungsgemäßen Dispersionen)

### 2.1 Herstellung von nicht-erfindungsgemäßen Vergleichsdispersionen der Verdickungsmittel V1 bis V14:

Es wird wenigstens ein organisches Lösemittel sowie gegebenenfalls wenigstens ein Neutralisationsmittel wie beispielsweise 2,4,7,9-Tetramethyl-5-decindiol vorgelegt. Zu der so erhaltenen Mischung wird unter Rühren bei einer Temperatur von 15-25°C wenigstens eines der vorstehend genannten kommerziell erhältlichen Polyamide gegeben. Zu dieser Mischung werden unter Rühren nacheinander oder gleichzeitig eine wässrige Dispersion eines Polyesters (I) und deionisiertes Wasser gegeben. Anschließend wird die resultierende Mischung über eine Dauer von 10 Minuten bei der vorstehend genannten Temperatur mittels des Geräts "Dispermat® LC30" der Firma VWA-Getzmann, Deutschland bei einer Umfangsgeschwindigkeit der eingesetzten Rührscheibe von 15 bis 20 m/s unter Rühren homogenisiert.

Auf diese Weise werden aus den in nachfolgenden Tabellen 1.1 und 1.2 aufgelisteten Komponenten die nicht-erfindungsgemäßen Dispersionen der Verdickungsmittel **V1** bis **V14** erhalten. Die jeweiligen Mengenangaben stellen jeweils Gew.-%, bezogen auf das Gesamtgewicht der jeweiligen Dispersion, dar:

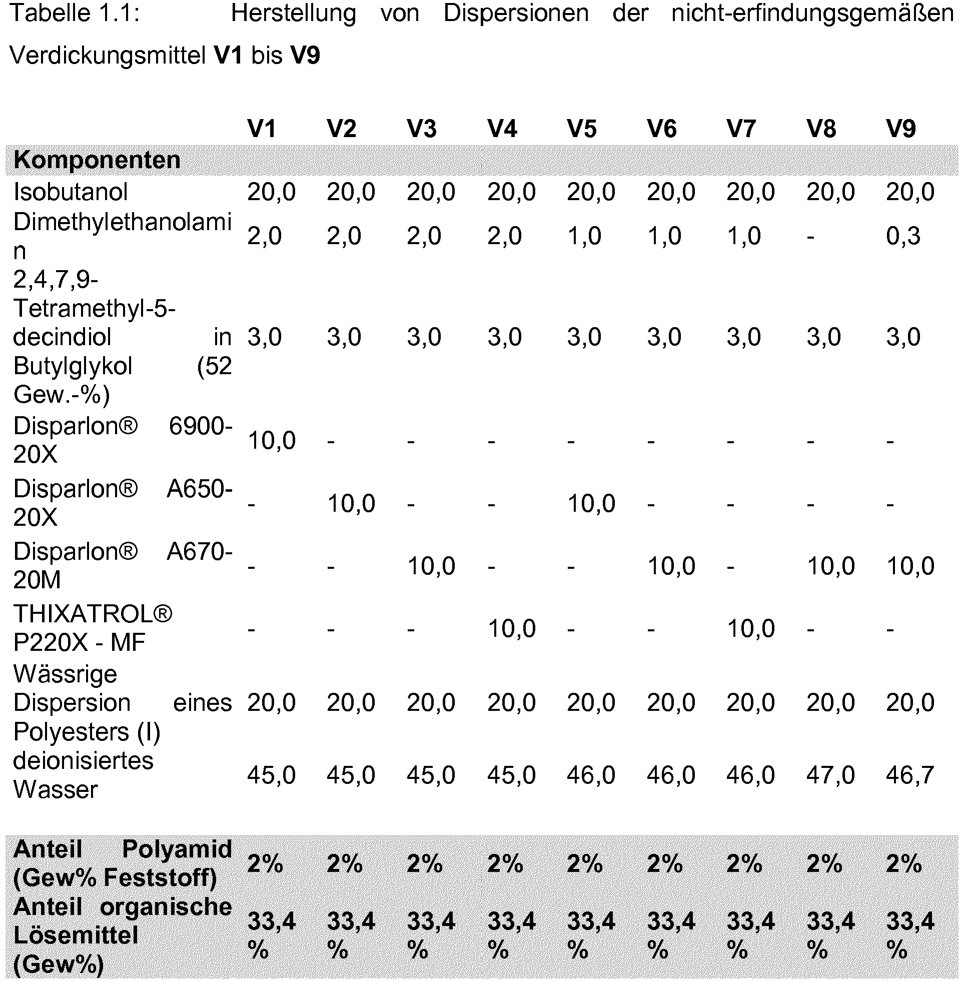

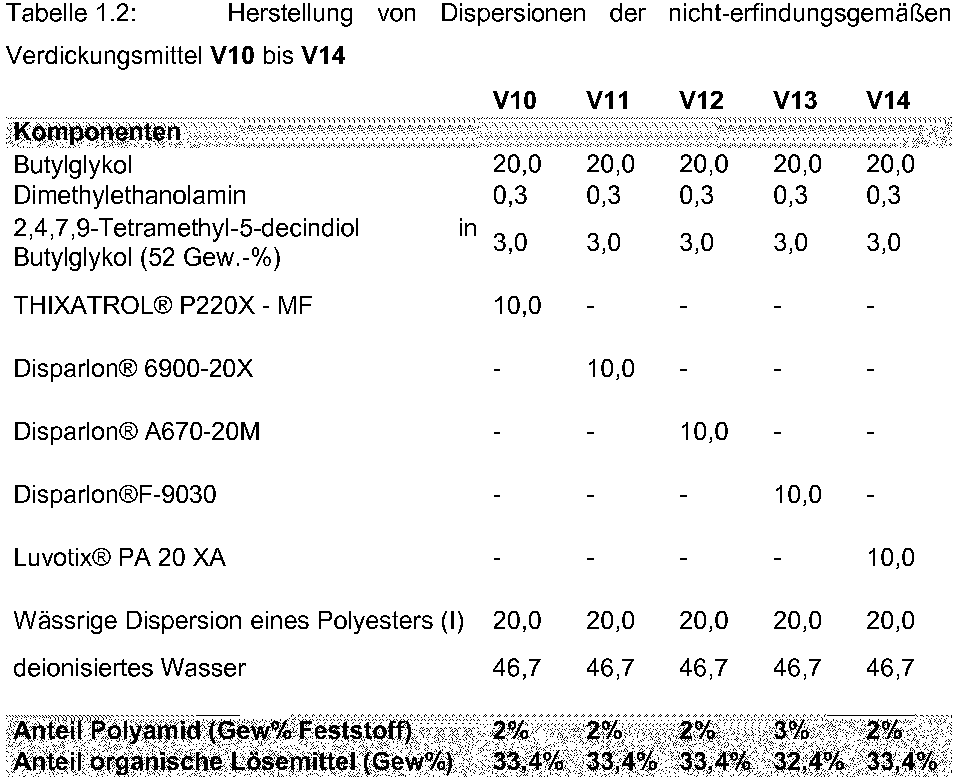

Die nicht-erfindungsgemäßen Vergleichsdispersionen **V1** bis **V14** weisen jeweils einen Gehalt an organischen Lösemitteln von >32 Gew.-%, bezogen auf das Gesamtgewicht der jeweiligen Dispersion auf. **V1** bis **V9** sind Isobutanol-basiert und **V10** bis **V14** Butylglykol-basiert.

### 2.2 Herstellung von nicht-erfindungsgemäßen Vergleichsdispersionen der Verdickungsmittel V15 bis V17:

Die in der nachstehenden Tabelle 1.3 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren für 10 Minuten homogenisiert. Die Homogenisierung erfolgt wie vorstehend unter Punkt **2.1** beschrieben.

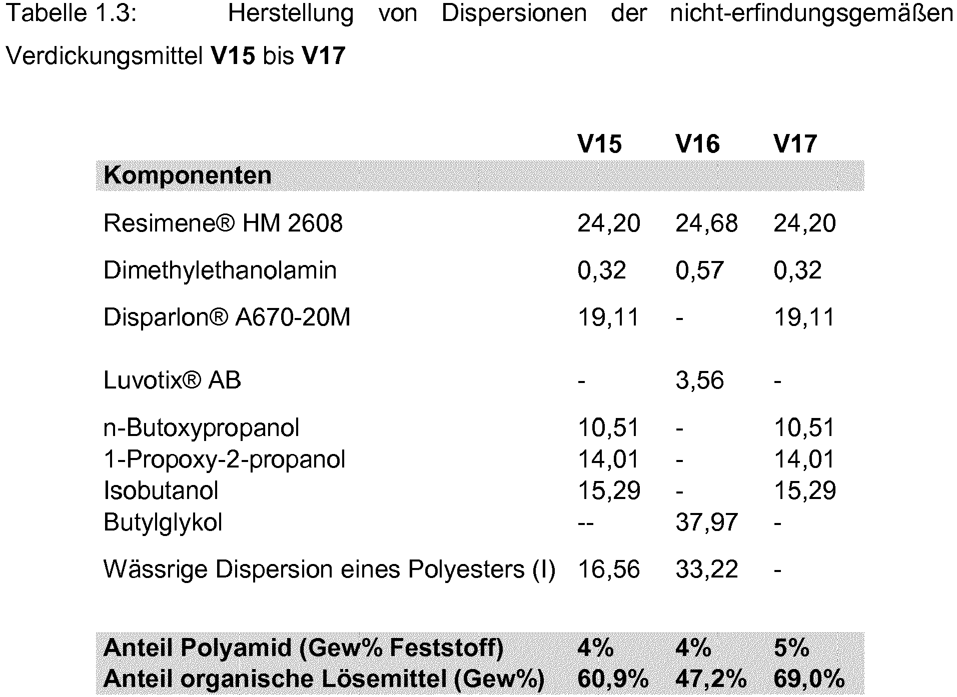

Die nicht-erfindungsgemäßen Vergleichsdispersionen **V15** bis **V17** weisen jeweils einen Gehalt an organischen Lösemitteln von >47 Gew.-%, bezogen auf das Gesamtgewicht der jeweiligen Dispersion auf.

### 2.3 Herstellung von erfindungsgemäßen Dispersionen der Verdickungsmittel X1 bis X7:

Die in der nachstehenden Tabelle 1.4 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

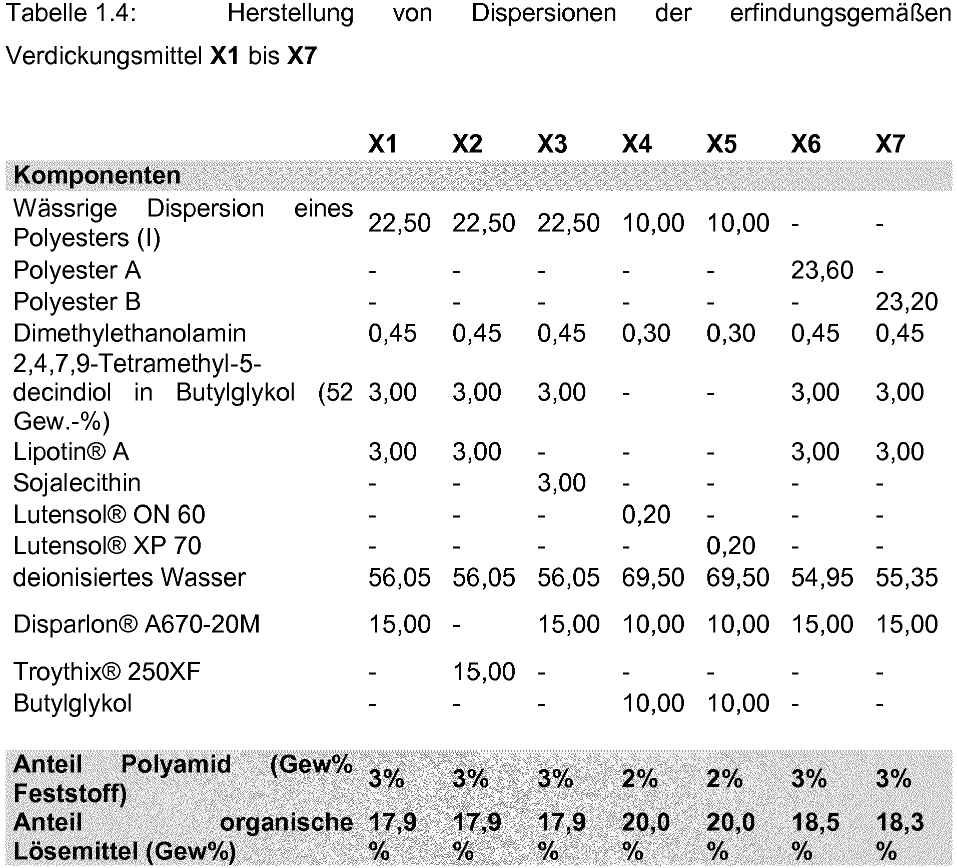

### 2.4 Herstellung einer erfindungsgemäßen Dispersionen des Verdickungsmittels X8 sowie einer nicht erfindungsgemäßen Dispersion eines Verdickungsmittels V18:

Die in der nachstehenden Tabelle 1.5 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

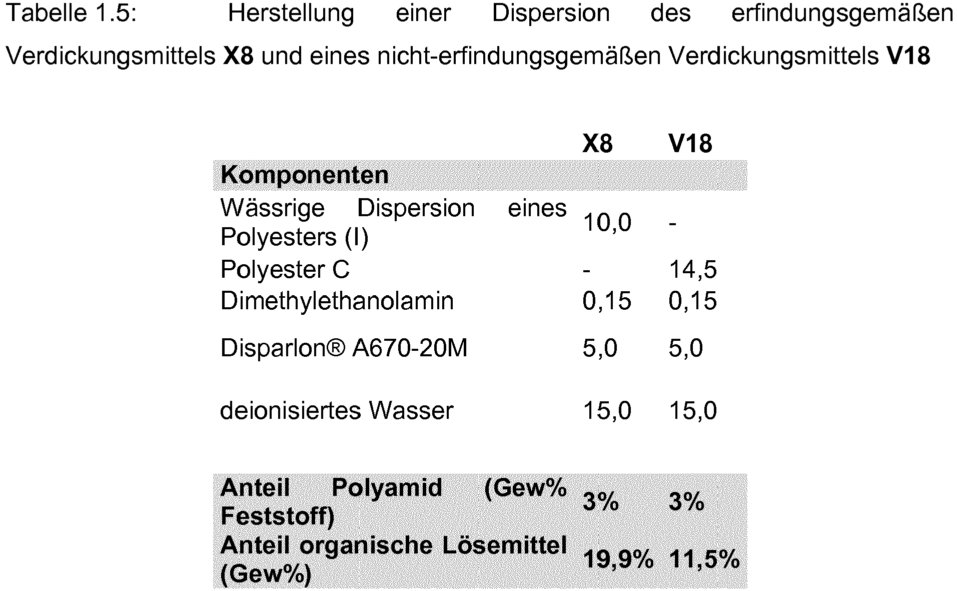

### 2.5 Herstellung von nicht-erfindungsgemäßen Vergleichsdispersionen der Verdickungsmittel V19 und V20:

Die in der nachstehenden Tabelle 1.6 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

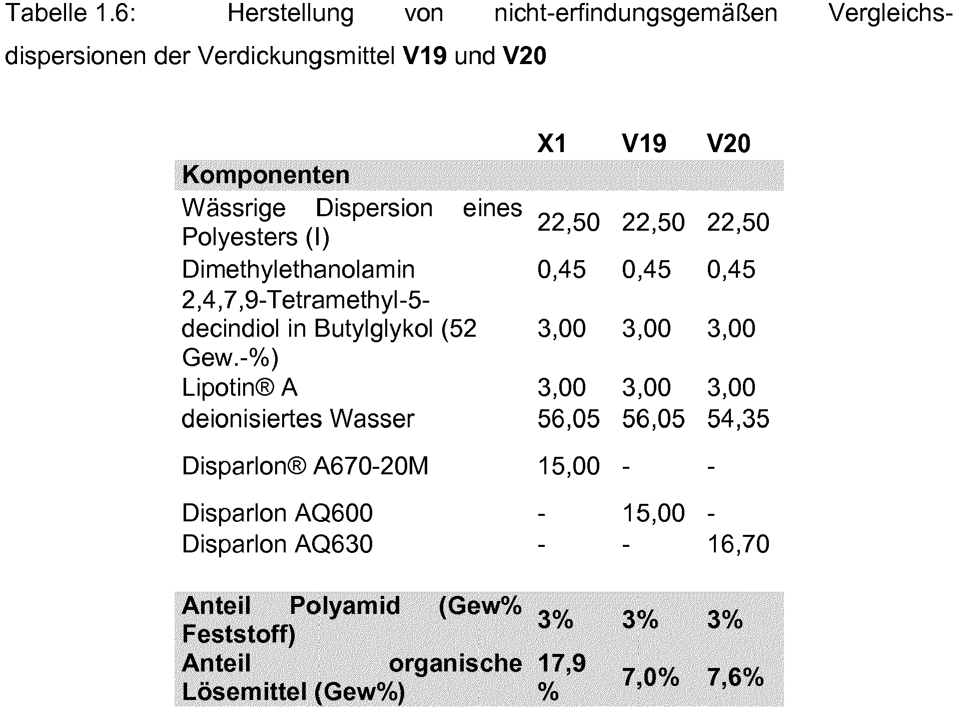

Da **V19** und **V20** Vergleichsdispersionen gegenüber **X1** darstellen, wird **X1** zur besseren Übersicht in Tabelle 1.6 nochmals individualisiert.

### 3. Herstellung von erfindungsgemäßen Beschichtungszusammensetzungen und Vergleichsbeschichtungszusammensetzungen

### 3.1 Allgemeine Arbeitsvorschrift zur Herstellung von erfindungsgemäßen Beschichtungszusammensetzungen und Vergleichsbeschichtungszusammensetzungen:

Die in den nachstehenden Tabellen jeweils unter "wässrige Phase" aufgeführten Komponenten werden in der angegebenen Reihenfolge jeweils zu einer wässrigen Mischung M1 zusammengerührt. Im nächsten Schritt wird aus den unter "organische Phase" aufgeführten Komponenten in den nachstehenden Tabellen jeweils eine organische Mischung M2 hergestellt. Die organische M2 Mischung wird zur wässrigen Mischung M1 gegeben. Sodann wird 10 min lang gerührt und mit Hilfe von deionisiertem Wasser und Dimethylethanolamin ein pH Wert von 8 und eine Spritzviskosität von 85 ± 5 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23°C, eingestellt.

Enthält eine der nachstehenden Tabellen zudem die weitere Rubrik "Mischlack", so werden diese darunter angeführten Komponenten in der angegebenen Reihenfolge jeweils zunächst zur Herstellung dieses Mischlacks zusammengerührt und über eine Dauer von 10 Minuten bei einer Temperatur von 15 bis 25°C durchmischt und dieser Mischlack dann zu der organischen Mischung M2 gegeben. Nachdem die resultierende Mischung aus Mischlack und organischer Mischung M2 über eine Dauer von 10 Minuten bei einer Temperatur von 15 bis 25°C gerührt worden ist, wird die so erhaltene Mischung dann zur wässrigen Mischung M1 gegeben und weiter wie vorstehend beschrieben verfahren.

Die jeweiligen Mengenangaben in jeder der nachstehenden Tabellen stellen jeweils Gew.-% dar, bezogen auf das Gesamtgewicht der jeweiligen Zusammensetzung.

### 3.2 Beschichtungszusammensetzungen V-I (nicht erfindungsgemäß) und B-X6 und B-X7 (erfindungsgemäß)

**Tabelle 2.1: Herstellung von B-X6 und B-X7 sowie von V-I**

| | **B-X6** | **B-X7** | **V-I** |
|---|---|---|---|
| **Wässrige Phase** | | | |
| deionisiertes Wasser | 17,40 | 17,40 | 30,35 |
| n-Butoxypropanol | 1,90 | 1,90 | 1,90 |
| 2-Ethylhexanol | 1,70 | 1,70 | 1,70 |
| Dispersion des Verdickungsmittels **X6** | 23,10 | - | - |
| Dispersion des Verdickungsmittels **X7** | - | 23,10 | - |
| Disparlon® A670-20M | - | - | 3,47 |
| Wässrige Dispersion wenigstens eines polymeren Harzes (II) | 24,25 | 24,25 | 24,25 |
| Wässrige Dispersion eines Polyesters (I) | - | - | 5,20 |
| 1-Propoxy-2-propanol | 2,55 | 2,55 | 2,55 |
| Butylglykol | 0,70 | 0,70 | 0,70 |
| Dimethylethanolamin in Wasser (10 Gew.-%) | 0,70 | 0,70 | 0,80 |
| Rheovis® AS 1130 | 0,90 | 0,90 | 0,90 |
| Resimene® HM 2608 | 4,40 | 4,40 | 4,40 |
| Pluriol® P900 | 1,15 | 1,15 | 1,15 |
| Wässrige Dispersion wenigstens eines polymeren Harzes (II) | 3,45 | 3,45 | 3,45 |

| **Organische Phase** | | | |
|---|---|---|---|
| Alu Stapa Hydrolux® VP56450 | 5,8 | 5,8 | 5,8 |
| Butylglykol | 6,2 | 6,2 | 6,2 |
| Wässrige Dispersion wenigstens eines polymeren Harzes (II) | 5,8 | 5,8 | 5,8 |

### 3.3 Beschichtungszusammensetzungen V-II und V-III (nicht erfindungsgemäß) und B-X1 (erfindungsgemäß)

**Tabelle 2.2: Herstellung von V-II und V-III sowie von B-X1**

| | **V-II** | **B-X1** | **V-III** |
|---|---|---|---|
| **Wässrige Phase:** | | | |
| Wässrige Lösung eines Na-Mg-Schichtsilikats (3 Gew.-% in deionisiertem Wasser) | 26,70 | - | - |
| deionisiertes Wasser | 7,75 | 16,48 | 29,34 |
| Butylglykol | 5,78 | 5,78 | - |
| Dispersion des Verdickungsmittels **X1** | - | 22,96 | - |
| Disparlon® A670-20M | - | - | 3,44 |
| Wässrige Dispersion wenigstens eines polymeren Harzes (II) | 32,26 | 32,26 | - |
| Wässrige Dispersion eines Polyesters (I) | 5,17 | - | 5,17 |
| Dimethylethanolamin in Wasser (10 Gew.-%) | 1,32 | 0,80 | 0,91 |
| Rheovis® AS 1130 | 0,86 | 0,75 | - |
| 2,4,7,9-Tetramethyl-5-decindiol in Butylglykol (52 Gew.-%) | 0,70 | - | 0,69 |
| Resimene® HM 2608 | 4,36 | 4,36 | - |
| Pluriol® P900 | 0,34 | 1,15 | - |

| **Organische Phase:** | | | |
|---|---|---|---|
| Butylglykol | 6,89 | 6,89 | 6,89 |
| Alu Stapa Hydrolux® VP56450 | 5,74 | 5,74 | 5,74 |

| **Mischlack:** | | | |
|---|---|---|---|
| Wässrige Dispersion wenigstens eines polymeren Harzes (II) | 1,89 | 1,89 | 1,89 |
| deionisiertes Wasser | 1,17 | 1,17 | 1,17 |
| 2,4,7,9-Tetramethyl-5-decindiol in Butylglykol (52 Gew.-%) | 0,24 | 0,24 | 0,24 |
| Dispex® Ultra FA 4437 | 0,10 | 0,10 | 0,10 |
| Dimethylethanolamin in Wasser (10 Gew.-%) | 0,01 | 0,01 | 0,01 |
| Butylglykol | 0,60 | 0,60 | 0,60 |

### 4. Prüfungen und Untersuchungen

### 4.1 Prüfungen und Untersuchungen hinsichtlich der erfindungsgemäßen Dispersionen und Vergleichsdispersionen

**4.1.1** Die nicht-erfindungsgemäßen Vergleichsdispersionen der Verdickungsmittel **V1** bis **V14,** die jeweils einen Gehalt an organischen Lösemitteln von >32 Gew.-%, bezogen auf das Gesamtgewicht der jeweiligen Dispersion aufweisen, werden gemäß den vorstehend beschriebenen Methoden hinsichtlich des Auftretens von Stippen, der Homogenität und ihrer Lagerstabilität untersucht und beurteilt.

Die Ergebnisse sind in Tabelle 3.1 zusammengefasst.

**Tab. 3.1**

| | **V1** bis **V14** |
|---|---|
| | |
| **Homogenität** | 2 |
| **Lagerstabilität** | 3 |
| **Stippenbildung** | 1 |

Aus Tab. 3.1 ist ersichtlich, dass **V1** bis **V14** jeweils zwar eine ausreichende Homogenität aufweisen und das Auftreten von Stippen nicht beobachtet werden kann, diese Dispersionen jedoch eine unzureichende Lagerstabilität aufweisen, da es bereits nach ca. 2 Wochen bei einer Lagerung bei 18-23°C wie innerhalb der Bestimmungsmethode beschrieben zu einer Entmischung in Form einer Phasenseparation kommt.

**4.1.2** Die nicht-erfindungsgemäßen Vergleichsdispersionen der Verdickungsmittel **V15** bis **V17,** die jeweils einen Gehalt an organischen Lösemitteln von >47 Gew.-%, bezogen auf das Gesamtgewicht der jeweiligen Dispersion aufweisen, werden gemäß den vorstehend beschriebenen Methoden hinsichtlich des Auftretens von Stippen, der Homogenität und ihrer Lagerstabilität untersucht und beurteilt.

Die Ergebnisse sind in Tabelle 3.2 zusammengefasst.

**Tab. 3.2**

| | **V15** | **V16** | **V17** |
|---|---|---|---|
| | | | |
| **Homogenität** | 1 | 1 | 1 |
| **Stabilität** | 3 | 3 | 5 |
| **Stippenbildung** | 1 | 1 | 1 |

Aus Tab. 3.2 ist ersichtlich, dass **V15** bis **V17** jeweils zwar eine ausreichende Homogenität aufweisen und das Auftreten von Stippen nicht beobachtet werden kann, diese Dispersionen jedoch eine unzureichende Lagerstabilität aufweisen, da es bereits nach einigen Tagen bei einer Lagerung bei 18-23°C (im Fall von **V15** und **V16**) bzw. nach einigen Stunden bei einer Lagerung bei 18-23°C (im Fall von **V17**) wie innerhalb der Bestimmungsmethode beschrieben zu einer Entmischung in Form einer Phasenseparation kommt.

**4.1.3** Die erfindungsgemäßen Dispersionen der Verdickungsmittel **X1** bis **X7,** die jeweils einen Gehalt an organischen Lösemitteln von <20 Gew.-%, bezogen auf das Gesamtgewicht der jeweiligen Dispersion aufweisen, werden gemäß den vorstehend beschriebenen Methoden hinsichtlich des Auftretens von Stippen, der Homogenität, der Wassermischbarkeit und ihrer Lagerstabilität untersucht und beurteilt. Zur Bestimmung der Wassermischbarkeit werden **X1** bis **X7** jeweils durch Mischen der in Tabelle 1.4 genannten Komponenten in der darin angegebenen Reihenfolge hergestellt, wobei jedoch in Einklang mit der Beschreibung der Methode zur Bestimmung der Wassermischbarkeit die Hälfte der in Tabelle 1.4 jeweils angegebenen Menge an deionisiertem Wasser erst als letzte Komponente zur Herstellung von **X1** bis **X7** eingesetzt wird (im Fall von **X1** werden somit beispielsweise von den insgesamt 56,05 Gewichtsteilen deionisiertem Wasser 28,025 Gewichtsteile erst als letzte Komponente eingesetzt).

Die Ergebnisse sind in Tabelle 3.3 zusammengefasst.

**Tab. 3.3**

| | **X1** | **X2** | **X3** | **X4** | **X5** | **X6** | **X7** |
|---|---|---|---|---|---|---|---|
| | | | | | | | |
| **Homogenität** | 1 | 1 | 1 | 1 | 1 | 1 | 1 |
| **Wassermischbarkeit** | 1 | 1 | 1 | 1 | 1 | 1 | 1 |
| | | | | | | | |
| **Stippenbildung nach Herstellung** | 1 | 1 | 1,5 | 1,5 | 1,5 | 1 | 1 |
| **nach 14 Tagen bei 40 °C** | 1 | 1 | 1,5 | 2 | 2 | 1 | 1 |
| **nach 28 Tagen bei 40 °C** | 1 | 1 | 1,5 | 2 | 2 | 1 | 1 |
| **nach 42 Tagen bei 40 °C** | 1 | 1 | 1,5 | 2 | 2 | 1 | 1 |
| | | | | | | | |
| **Lagerstabilität nach 28 Tagen bei 40 °C** | 1 | 1 | 1 | 1 | 1 | 1 | 1 |
| **nach 365 Tagen bei 40 °C** | 1 | n.d. | 1 | n.d | n.d. | n.d. | n.d. |

| | | | | | | | |
|---|---|---|---|---|---|---|---|
| n.d. = nicht durchgeführt | | | | | | | |

Aus Tab. 3.3 ist ersichtlich, dass **X1** bis **X7** jeweils eine gute Homogenität und Wassermischbarkeit aufweisen und das Auftreten von Stippen nicht oder nur marginal beobachtet werden kann. Zudem zeigen alle Dispersionen **X1** bis **X7** jeweils eine gute Lagerstabilität bei einer Lagerung bei 40°C über einen Zeitraum von 28 Tagen wie innerhalb der Bestimmungsmethode beschrieben: es konnte keine Entmischung bzw. eine Phasenseparation beobachtet werden. Die Dispersionen **X1** und **X3** wurden zudem über einen Zeitraum von 365 Tagen bei 40°C wie innerhalb der Bestimmungsmethode beschrieben gelagert: auch nach dieser vergleichsweise langen Zeit konnte keine Entmischung bzw. eine Phasenseparation beobachtet werden.

**4.1.4** Die erfindungsgemäße Dispersion des Verdickungsmittels **X8** sowie die Vergleichsdispersion **V18** werden gemäß den vorstehend beschriebenen Methoden hinsichtlich des Auftretens von Stippen, der Homogenität und der Wassermischbarkeit untersucht und beurteilt. Zur Bestimmung der Wassermischbarkeit werden **V18** bzw. **X8** jeweils durch Mischen der in Tabelle 1.5 genannten Komponenten in der darin angegebenen Reihenfolge hergestellt, wobei in Einklang mit der Beschreibung der Methode zur Bestimmung der Wassermischbarkeit die in Tabelle 1.5 angegebene Menge an deionisiertem Wasser erst als letzte Komponente zur Herstellung von **V18** bzw. **X8** eingesetzt wird.

Die Ergebnisse sind in Tabelle 3.4 zusammengefasst.

**Tab. 3.4**

| | **V18** | **X8** |
|---|---|---|
| | | |
| **Homogenität** | 5 | 1 |
| **Wassermisch-barkeit** | 5 | 1 |
| **Stippenbildung** | 5 | 1 |

Aus Tab. 3.4 ist ersichtlich, dass mit **V18** im Gegensatz zu **X8** weder eine gute Homogenität noch eine gute Wassermischbarkeit erzielt werden kann. Zudem konnte eine Vielzahl von aufgetretenen Stippen im Fall von **V18** beobachtet werden. **V18** enthält als Polyester-Komponente einen Polyester, welcher *nicht* durch Umsetzung wenigstens einer polymerisierten aliphatischen C₁₂-C₂₄-Monocarbonsäure mit wenigstens einem Diol und/oder Polyol erhalten worden ist: diese Ergebnisse zeigen, dass es erfindungswesentlich ist, dass der erfindungsgemäß eingesetzte Polyester durch eine solche Umsetzung unter Beteiligung einer polymerisierten aliphatischen C₁₂-C₂₄-Monocarbonsäure erhältlich ist.

**4.1.5** Die erfindungsgemäße Dispersion des Verdickungsmittels **X1** sowie die Vergleichsdispersionen **V19** und **V20** werden gemäß den vorstehend beschriebenen Methoden hinsichtlich des Auftretens von Stippen und der Homogenität untersucht und beurteilt.

Die Ergebnisse sind in Tabelle 3.5 zusammengefasst.

**Tab. 3.5**

| | **X1** | **V19** | **V20** |
|---|---|---|---|
| | | | |
| **Homogenität** | 1 | 1 | 1 |
| **Stippenbildung nach Herstellung** | 1 | 3-4 | 3-4 |
| **nach 14 Tagen bei 40 °C** | 1 | 3-4 | 3-4 |

Aus Tab. 3.5 ist ersichtlich, dass mit **V19** und **V20** zwar ebenso wie mit **X1** eine gute Homogenität erzielt werden kann, im Fall von **V19** und **V20** jedoch im Gegensatz zu **X1** das Auftreten einer Vielzahl von Stippen nach Herstellung und ebenso nach Lagerung beobachtet wird. **V19** und **V20** enthalten als Polyamide üblicherweise in wässrigen Zusammensetzungen eingesetzte Polyamide mit hoher Säure-Zahl, nämlich die kommerziell erhältlichen Produkte Disparlon® AQ600 (**V19**) und AQ630 (**V20**). Dieser Nachteil wird im Fall von **X1** nicht beobachtet.

### 4.2 Prüfungen und Untersuchungen hinsichtlich der erfindungsgemäßen Beschichtungszusammensetzungen und Vergleichsbeschichtungszusammensetzungen

### 4.2.1 Untersuchungen hinsichtlich des Auftretens von Nadelstichen und Stippen

Diese Untersuchungen erfolgen gemäß den vorstehend beschriebenen Methoden.

Die Ergebnisse sind in Tabellen 4.1 und 4.2 zusammengefasst.

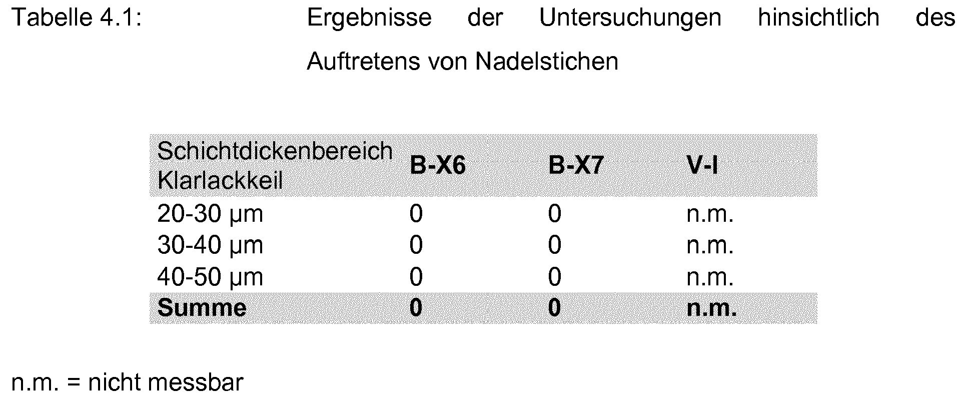

**Tabelle 4.2: Ergebnisse der Untersuchungen hinsichtlich des Auftretens von Stippen**

| | **B-X6** | **B-X7** | **V-1** |
|---|---|---|---|
| Stippen | 1 | 1 | 5 |

Wie aus Tab. 4.1 ersichtlich ist, resultiert die Gegenwart der erfindungsgemäßen Dispersionen **X6** und **X7** als Komponente der wässrigen Basislacke **B-X6** und **B-X7** in einer exzellenten Nadelstichrobustheit: es konnten keine Nadelstiche beobachtet werden. Wie aus Tab. 4.2 ersichtlich ist, konnte zudem keinerlei Stippenbildung im Fall von **B-X6** und **B-X7** beobachtet werden. Dagegen wurde eine Vielzahl von Stippen im Fall des Vergleichsbasislack **V-I** beobachtet: Der wässrige Vergleichsbasislack **V-I** enthält die zur Herstellung der erfindungsgemäßen Dispersionen eingesetzten Einzelkomponenten, d.h. einen Polyester (wässrige Dispersion des Polyesters (I)) und ein Polyamid (Disparlon® A670-20M), welche jedoch nicht vorab zu einer erfindungsgemäßen Dispersion verarbeitet worden sind, sondern direkt als separate Komponenten in den Vergleichsbasislack **V-I** eingearbeitet wurden. Zudem kann im Fall von **V-I** bei einer Lagerung bei 18-23°C bereits nach einigen wenigen Stunden eine Entmischung beobachtet werden. Aufgrund dessen ist eine Auswertung der Nadelstichprüfung im Fall von **V-I** nicht möglich.

### 4.2.2 Untersuchungen hinsichtlich des Auftretens von Stippen und der Lagerstabilität

Diese Untersuchungen erfolgen gemäß den vorstehend beschriebenen Methoden.

Die Ergebnisse sind in Tabellen 4.3 und 4.4 zusammengefasst.

**Tabelle 4.3: Ergebnisse der Untersuchungen hinsichtlich des Auftretens von Stippen**

| | **V-II** | **B-X1** | **V-III** |
|---|---|---|---|
| Stippen | 1 | 1 | 5 |

**Tabelle 4.4: Ergebnisse der Untersuchungen hinsichtlich der Lagerstabilität**

| | | **V-II** | **B-X1** | **V-III** |
|---|---|---|---|---|
| Niederscherviskosität (1 s-¹) in mPa·s | direkt nach Herstellung | 3013 | 3053 | n.m. |
| | nach 2 Wochen Lagerung bei 40°C | 3819 | 3177 | n.m. |
| | Veränderung [%] | 27% | 4% | |
| | | | | |
| Hochscherviskosität (1000 s-¹) in mPa·s | direkt nach Herstellung | 78 | 79 | n.m. |
| | nach 2 Wochen Lagerung bei 40 °C | 87 | 85 | n.m. |
| | Veränderung [%] | 11% | 6% | |

| | | | | |
|---|---|---|---|---|
| n.m. = nicht messbar | | | | |

Wie aus Tab. 4.3 ersichtlich ist, konnte keinerlei Stippenbildung im Fall von **B-X1** und **V-II** (enthaltend ein Na-Mg-Schichtsilikat als Verdicker) beobachtet werden. Dagegen wurde eine Vielzahl von Stippen im Fall des Vergleichsbasislack **V-III** beobachtet: Der wässrige Vergleichsbasislack **V-III** enthält die zur Herstellung der erfindungsgemäßen Dispersionen eingesetzten Einzelkomponenten, d.h. einen Polyester (wässrige Dispersion des Polyesters (I)) und ein Polyamid (Disparlon® A670-20M), welche jedoch nicht vorab zu einer erfindungsgemäßen Dispersion verarbeitet worden sind, sondern direkt als separate Komponenten in den Vergleichsbasislack **V-III** eingearbeitet wurden. Im Fall von **V-III** wird bei einer Lagerung bei 40°C bereits nach einigen wenigen Stunden eine Phasenseparation bzw. Entmischung beobachtet, d.h. das erfindungsgemäß eingesetzte Polyamid lässt sich nicht als solches in einen wässrigen Basislack einarbeiten, sondern nur in Form einer erfindungsgemäßen wässrigen Dispersion. Aufgrunddessen und aufgrund der Vielzahl der aufgetretenen Stippen im Fall des Vergleichsbasislack **V-III** ist eine Bestimmung der Nieder- und Hochscherviskositäten im Fall von **V-III** nicht möglich. Die Wasserbasislacke **V-II** und **B-X1** hingegen sind stabil bei einer Lagerung bei 40°C und zeigen eine akzeptable Verschiebung der Hoch- und Niederscherviskosität nach 2 Wochen Lagerung bei 40 °C, wobei der erfindungsgemäße Wasserbasislack **B-X1** signifikante Vorteile gegenüber der **V-II** (geringere Veränderungen) aufweist (vgl. Tab. 4.4).

### 4.2.3 Untersuchungen hinsichtlich der Wolkigkeit

Diese Untersuchung erfolgt gemäß der vorstehend beschriebenen Methode. Dabei werden die erfindungsgemäße Beschichtungszusammensetzung **B-X1** sowie die Vergleichsbeschichtungszusammensetzung **V-II** als Wasserbasislack auf ein wie innerhalb der Bestimmungsmethode beschrieben beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 4.5 zusammengefasst.

**Tabelle 4.5: Ergebnisse der Untersuchungen hinsichtlich der Wolkigkeit**

| | **V-II** | **B-X1** |
|---|---|---|
| Wolken Aufsicht (80°) | 4 | 2 |
| Wolken Schrägsicht (40°) | 4 | 3 |

Die Ergebnisse belegen, dass die erfindungsgemäße Beschichtungszusammensetzung **B-X1** im Vergleich zu **V2** eine wesentlich geringere Wolkigkeit aufweist.

## Patentansprüche

1. Eine wässrige Dispersion (P) umfassend wenigstens ein polymeres Harz (P1) und wenigstens ein davon verschiedenes polymeres Harz (P2), wobei
das polymere Harz (P1) ein Polyamid ist und
das polymere Harz (P2) ein Polyester ist,
wobei die wässrige Dispersion (P) erhältlich ist durch Dispergieren des polymeren Harzes (P1) in Wasser oder einem wässrigen Medium in Gegenwart des polymeren Harzes (P2),
**dadurch gekennzeichnet, dass**
das als polymeres Harz (P1) eingesetzte Polyamid eine Säure-Zahl <10 mg KOH pro g an Polyamid aufweist,
der als polymeres Harz (P2) eingesetzte Polyester mindestens erhältlich ist durch Umsetzung wenigstens einer polymerisierten aliphatischen C₁₂-C₂₄-Monocarbonsäure mit wenigstens einem Diol und/oder Polyol und
die wässrige Dispersion (P) höchstens 25 Gew.-%, bezogen auf das Gesamtgewicht der Dispersion (P), eines oder mehrerer organischer Lösemittel, aufweist.

2. Die wässrige Dispersion (P) gemäß Anspruch 1, **dadurch gekennzeichnet, dass** sie höchstens 20 Gew.-%, bezogen auf das Gesamtgewicht der Dispersion (P), eines oder mehrerer organischer Lösemittel, aufweist.

3. Die wässrige Dispersion (P) gemäß Anspruch 1 oder 2, **dadurch gekennzeichnet, dass** das als polymeres Harz (P1) eingesetzte Polyamid eine Säure-Zahl in einem Bereich von 0,01 bis 8,0 mg KOH pro g an Polyamid aufweist.

4. Die wässrige Dispersion (P) gemäß einem der vorstehenden Ansprüche, **dadurch gekennzeichnet, dass** das relative Gewichtsverhältnis der polymeren Harze (P2) und (P1) zueinander, jeweils bezogen auf deren Festkörpergehalt, in der Dispersion (P) in einem Bereich von 10:1 bis 1,5:1 liegt.

5. Die wässrige Dispersion (P) gemäß einem der vorstehenden Ansprüche, **dadurch gekennzeichnet, dass** das als polymeres Harz (P1) eingesetzte Polyamid in der Dispersion (P) in einer Menge in einem Bereich von 0,5 bis 15 Gew.-%, bezogen auf das Gesamtgewicht der Dispersion (P) vorhanden ist.

6. Die wässrige Dispersion (P) gemäß einem der vorstehenden Ansprüche, **dadurch gekennzeichnet, dass** der als polymeres Harz (P2) eingesetzte Polyester in der Dispersion (P) in einer Menge in einem Bereich von 5 bis 20 Gew.-%, bezogen auf das Gesamtgewicht der Dispersion (P) vorhanden ist.

7. Die wässrige Dispersion (P) gemäß einem der vorstehenden Ansprüche, **dadurch gekennzeichnet, dass** der als polymeres Harz (P2) eingesetzte Polyester eine Säure-Zahl in einem Bereich von 20 bis 50 mg KOH pro g an Polyester und/oder eine Hydroxyl-Zahl in einem Bereich von 20 bis 300 mg KOH pro g an Polyester aufweist.

8. Die wässrige Dispersion (P) gemäß einem der vorstehenden Ansprüche, **dadurch gekennzeichnet, dass** der als polymeres Harz (P2) eingesetzte Polyester mindestens erhältlich ist durch Umsetzung wenigstens einer dimerisierten und/oder trimerisierten aliphatischen C₁₂-C₂₄-Monocarbonsäure mit wenigstens einem aliphatischen C₂-C₂₀-Polyol und/oder C₂-C₂₀-Diol.

9. Die wässrige Dispersion (P) gemäß einem der vorstehenden Ansprüche, **dadurch gekennzeichnet, dass** zur Herstellung des als polymeres Harz (P2) eingesetzten Polyesters zudem wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂-Tricarbonsäuren, und gegebenenfalls zudem wenigstens eine aliphatische C₁₂-C₂₄-Monocarbonsäure eingesetzt wird.

10. Eine Verwendung der Dispersion (P) gemäß einem der vorstehenden Ansprüche als Rheologiehilfsmittel in wässrigen Beschichtungszusammensetzungen.

11. Eine wässrige Beschichtungszusammensetzung umfassend
die wässrige Dispersion (P) umfassend wenigstens ein polymeres Harz (P1) und wenigstens ein davon verschiedenes polymeres Harz (P2) gemäß einem der Ansprüche 1 bis 9,
wenigstens ein Bindemittel (A) umfassend wenigstens ein polymeres Harz (A1), welches von den polymeren Harzen (P1) und (P2) verschieden ist, und gegebenenfalls wenigstens ein Vernetzungsmittel (A2), und
wenigstens ein Pigment (B)
zur zumindest teilweisen Beschichtung eines gegebenenfalls beschichteten Substrats mit einer Basislackschicht.

12. Die Beschichtungszusammensetzung gemäß Anspruch 11, **dadurch gekennzeichnet, dass** sie das innerhalb der Dispersion (P) als polymeres Harz (P1) eingesetzte Polyamid in einer Menge in einem Bereich von 0,05 bis 5 Gew.-%, bezogen auf das Gesamtgewicht der Beschichtungszusammensetzung, enthält.

13. Die Beschichtungszusammensetzung gemäß Anspruch 11 oder 12, **dadurch gekennzeichnet, dass** das Bindemittel (A) wenigstens ein Polyurethan und/oder wenigstens ein Poly(meth)acrylat und/oder wenigstens einen Polyester als wenigstens ein polymeres Harz (A1) umfasst.

14. Die Beschichtungszusammensetzung gemäß einem der Ansprüche 11 bis 13 **dadurch gekennzeichnet, dass** sie das polymere Harz (A1) in einer Menge in einem Bereich von 5 bis 40 Gew.-%, bezogen auf das Gesamtgewicht der Beschichtungszusammensetzung, und das Pigment (B) in einer Menge in einem Bereich von 0,1 bis 25 Gew.-%, bezogen auf das Gesamtgewicht der Beschichtungszusammensetzung, enthält.

15. Ein zumindest teilweise mit der wässrigen Beschichtungszusammensetzung gemäß einem der Ansprüche 11 bis 14 beschichtetes Substrat.

## Claims

1. An aqueous dispersion (P) comprising at least one polymeric resin (P1) and at least one polymeric resin (P2) different therefrom, where
the polymeric resin (P1) is a polyamide and
the polymeric resin (P2) is a polyester,
the aqueous dispersion (P) being obtainable by dispersing of the polymeric resin (P1) in water or an aqueous medium in the presence of the polymeric resin (P2),
**characterized in that**
the polyamide used as polymeric resin (P1) has an acid number < 10 mg of KOH per g of polyamide,
the polyester used as polymeric resin (P2) is at least obtainable by reaction of at least one polymerized aliphatic C₁₂-C₂₄ monocarboxylic acid with at least one diol and/or polyol, and
the aqueous dispersion (P) contains at most 25 wt%, based on the total weight of the dispersion (P), of one or more organic solvents.

2. The aqueous dispersion (P) according to Claim 1, **characterized in that** it contains at most 20 wt%, based on the total weight of the dispersion (P), of one or more organic solvents.

3. The aqueous dispersion (P) according to Claim 1 or 2, **characterized in that** the polyamide used as polymeric resin (P1) has an acid number in a range from 0.01 to 8.0 mg of KOH per g of polyamide.

4. The aqueous dispersion (P) according to any of the preceding claims, **characterized in that** the relative weight ratio of polymeric resins (P2) and (P1) to one another, based in each case on their solids content, in the dispersion (P) is in a range from 10:1 to 1.5:1.

5. The aqueous dispersion (P) according to any of the preceding claims, **characterized in that** the polyamide used as polymeric resin (P1) is present in the dispersion (P) in an amount in a range from 0.5 to 15 wt%, based on the total weight of the dispersion (P) .

6. The aqueous dispersion (P) according to any of the preceding claims, **characterized in that** the polyester used as polymeric resin (P2) is present in the dispersion (P) in an amount in a range from 5 to 20 wt%, based on the total weight of the dispersion (P) .

7. The aqueous dispersion (P) according to any of the preceding claims, **characterized in that** the polyester used as polymeric resin (P2) has an acid number in a range from 20 to 50 mg of KOH per g of polyester and/or a hydroxyl number in a range from 20 to 300 mg of KOH per g of polyester.

8. The aqueous dispersion (P) according to any of the preceding claims, **characterized in that** the polyester used as polymeric resin (P2) is at least obtainable by reaction of at least one dimerized and/or trimerized aliphatic C₁₂-C₂₄-monocarboxylic acid with at least one aliphatic C₂-C₂₀ polyol and/or C₂-C₂₀ diol.

9. The aqueous dispersion (P) according to any of the preceding claims, **characterized in that** the polyester used as polymeric resin (P2) is prepared using additionally at least one dicarboxylic acid and/or at least one tricarboxylic acid selected from the group consisting of aliphatic C₃-C₁₂ dicarboxylic acids, cycloaliphatic C₅-C₁₂ dicarboxylic acids, aromatic C₈-C₁₂-dicarboxylic acids, aliphatic C₅-C₁₂ tricarboxylic acids, cycloaliphatic C₆-C₁₂ tricarboxylic acids and aromatic C₉-C₁₂ tricarboxylic acids, and optionally additionally using at least one aliphatic C₁₂-C₂₄ monocarboxylic acid.

10. A use of the dispersion (P) according to any of the preceding claims as a rheological assistant in aqueous coating compositions.

11. An aqueous coating composition comprising
the aqueous dispersion (P) comprising at least one polymeric resin (P1) and at least one polymeric resin (P2) different therefrom according to any of Claims 1 to 9,
at least one binder (A) comprising at least one polymeric resin (A1), which is different from the polymeric resins (P1) and (P2), and optionally at least one crosslinking agent (A2), and
at least one pigment (B)
for at least partly coating an optionally coated substrate with a basecoat film.

12. The coating composition according to Claim 11, **characterized in that** it comprises the polyamide used as polymeric resin (P1) within the dispersion (P) in an amount in a range from 0.05 to 5 wt%, based on the total weight of the coating composition.

13. The coating composition according to Claim 11 or 12, **characterized in that** the binder (A) comprises at least one polyurethane and/or at least one poly(meth)acrylate and/or at least one polyester as at least one polymeric resin (A1).

14. The coating composition according to any of Claims 11 to 13, **characterized in that** it comprises the polymeric resin (A1) in an amount in a range from 5 to 40 wt%, based on the total weight of the coating composition, and the pigment (B) in an amount in a range from 0.1 to 25 wt%, based on the total weight of the coating composition.

15. A substrate coated at least partly with the aqueous coating composition according to any of Claims 11 to 14.

## Revendications

1. Dispersion aqueuse (P) comprenant au moins une résine polymère (P1) et au moins une résine polymère (P2) différente de celle-ci,
la résine polymère (P1) étant un polyamide et
la résine polymère (P2) étant un polyester,
la dispersion aqueuse (P) pouvant être obtenue par dispersion de la résine polymère (P1) dans de l'eau ou un milieu aqueux en présence de la résine polymère (P2),
**caractérisée en ce que**
le polyamide utilisé en tant que résine polymère (P1) présente un indice d'acidité < 10 mg de KOH par g de polyamide,
le polyester utilisé en tant que résine polymère (P2) peut au moins être obtenu par mise en réaction d'au moins un acide monocarboxylique en C₁₂-C₂₄ aliphatique polymérisé avec au moins un diol et/ou polyol, et
la dispersion aqueuse (P) comprend au plus 25 % en poids, par rapport au poids total de la dispersion (P), d'un ou de plusieurs solvants organiques.

2. Dispersion aqueuse (P) selon la revendication 1, **caractérisée en ce qu'**elle comprend au plus 20 % en poids, par rapport au poids total de la dispersion (P), d'un ou de plusieurs solvants organiques.

3. Dispersion aqueuse (P) selon la revendication 1 ou 2, **caractérisée en ce que** le polyamide utilisé en tant que résine polymère (P1) présente un indice d'acidité dans une plage allant de 0,01 à 8,0 mg de KOH par g de polyamide.

4. Dispersion aqueuse (P) selon l'une quelconque des revendications précédentes, **caractérisée en ce que** le rapport en poids relatif des résines polymères (P2) et (P1) l'une par rapport à l'autre, à chaque fois en termes de leur teneur en solides, dans la dispersion (P) se situe dans une plage allant de 10:1 à 1,5:1.

5. Dispersion aqueuse (P) selon l'une quelconque des revendications précédentes, **caractérisée en ce que** le polyamide utilisé en tant que résine polymère (P1) est présent dans la dispersion (P) en une quantité dans une plage allant de 0,5 à 15 % en poids, par rapport au poids total de la dispersion (P).

6. Dispersion aqueuse (P) selon l'une quelconque des revendications précédentes, **caractérisée en ce que** le polyester utilisé en tant que résine polymère (P2) est présent dans la dispersion (P) en une quantité dans une plage allant de 5 à 20 % en poids, par rapport au poids total de la dispersion (P).

7. Dispersion aqueuse (P) selon l'une quelconque des revendications précédentes, **caractérisée en ce que** le polyester utilisé en tant que résine polymère (P2) présente un indice d'acidité dans une plage allant de 20 à 50 mg de KOH par g de polyester et/ou un indice hydroxyle dans une plage allant de 20 à 300 mg de KOH/g de polyester.

8. Dispersion aqueuse (P) selon l'une quelconque des revendications précédentes, **caractérisée en ce que** le polyester utilisé en tant que résine polymère (P2) peut au moins être obtenu par mise en réaction d'au moins un acide monocarboxylique en C₁₂-C₂₄ aliphatique dimérisé et/ou trimérisé avec au moins un polyol en C₂-C₂₀ et/ou diol en C₂-C₂₀ aliphatique.

9. Dispersion aqueuse (P) selon l'une quelconque des revendications précédentes, **caractérisée en ce que**, pour la fabrication du polyester utilisé en tant que résine polymère (P2), en outre au moins un acide dicarboxylique et/ou au moins un acide tricarboxylique choisis dans le groupe constitué par les acides dicarboxyliques en C₃-C₁₂ aliphatiques, les acides dicarboxyliques en C₅-C₁₂ cycloaliphatiques, les acides dicarboxyliques en C₈-C₁₂ aromatiques, les acides tricarboxyliques en C₅-C₁₂ aliphatiques, les acides tricarboxyliques en C₆-C₁₂ cycloaliphatiques et les acides tricarboxyliques en C₉-C₁₂ aromatiques, et éventuellement en outre au moins un acide monocarboxylique en C₁₂-C₂₄ aliphatique sont utilisés.

10. Utilisation de la dispersion (P) selon l'une quelconque des revendications précédentes en tant qu'adjuvant de rhéologie dans des compositions aqueuses de revêtement.

11. Composition aqueuse de revêtement, comprenant :
la dispersion aqueuse (P) comprenant au moins une résine polymère (P1) et au moins une résine polymère (P2) différente de celle-ci selon l'une quelconque des revendications 1 à 9,
au moins un liant (A) comprenant au moins une résine polymère (A1), qui est différente des résines polymères (P1) et (P2), et éventuellement au moins un agent de réticulation (A2), et
au moins un pigment (B),
pour le revêtement au moins partiel d'un substrat éventuellement revêtu avec une couche de vernis de base.

12. Composition de revêtement selon la revendication 11, **caractérisée en ce qu'**elle contient le polyamide utilisé en tant que résine polymère (P1) dans la dispersion (P) en une quantité dans une plage allant de 0,05 à 5 % en poids, par rapport au poids total de la composition de revêtement.

13. Composition de revêtement selon la revendication 11 ou 12, **caractérisée en ce que** le liant (A) comprend au moins un polyuréthane et/ou au moins un poly(méth)acrylate et/ou au moins un polyester en tant qu'au moins une résine polymère (A1).

14. Composition de revêtement selon l'une quelconque des revendications 11 à 13, **caractérisée en ce qu'**elle contient la résine polymère (A1) en une quantité dans une plage allant de 5 à 40 % en poids, par rapport au poids total de la composition de revêtement, et le pigment (B) en une quantité dans une plage allant de 0,1 à 25 % en poids, par rapport au poids total de la composition de revêtement.

15. Substrat au moins partiellement revêtu avec la composition aqueuse de revêtement selon l'une quelconque des revendications 11 à 14.
